# EUROPEAN PATENT SPECIFICATION

(11) **EP 2 728 928 B1**
(45) Date of publication and mention of the grant of the patent: **11.10.2017**
(21) Application number: 12819995.7
(22) Date of filing: 02.08.2012
(51) Int. Cl.: H04W 72/12

(54) **METHOD, BASE STATION AND USER EQUIPMENT FOR TRANSMITTING SCHEDULING INFORMATION**
VERFAHREN, BASISSTATION UND BENUTZERGERÄT ZUM SENDEN VON PLANUNGSINFORMATIONEN
PROCÉDÉ, STATION DE BASE ET ÉQUIPEMENT D'UTILISATEUR POUR TRANSMETTRE DES INFORMATIONS DE PROGRAMMATION

(30) Priority: 02.08.2011 CN 201110219439
(43) Date of publication of application: 07.05.2014
(73) Proprietor: Huawei Technologies Co., Ltd., Longgang District Shenzhen, Guangdong 518129 (CN)
(72) Inventor: QUAN, Wei, Shenzhen Guangdong 518129 (CN); CHEN, Yuhua, Shenzhen Guangdong 518129 (CN); ZHANG, Jian, Shenzhen Guangdong 518129 (CN)
(74) Representative: Maiwald Patentanwalts GmbH
(86) International application number: PCT/CN2012/079603
(87) International publication number: WO 2013/017096

(56) References cited:
- EP-A1- 2 658 338
- WO-A1-2005/067262
- WO-A1-2010/051209
- WO-A1-2011/060997
- WO-A2-2009/121025
- CN-A- 101 500 309
- CN-A- 101 888 700
- US-A1- 2007 253 421

## Description

### TECHNICAL FIELD

The present invention relates to the communications field, and in particular, to a method, base station, and user equipment for transmitting scheduling information in the communications field.

### BACKGROUND

In a long term evolution (Long Term Evolution, "LTE" for short) system, an evolved base station (evolved NodeB, "eNB" for short) uses a physical downlink control channel (Physical Downlink Control Channel, "PDCCH" for short) to transmit control signaling used for scheduling a user equipment (User Equipment, "UE" for short). The control signaling includes information such as physical channel resources allocated to the UE and a specifically used modulation and coding scheme (Modulation and Codec Scheme, "MCS" for short). After receiving the control signaling transmitted through the PDCCH, the UE parses the related information carried in the signaling, and performs data transmission and reception on a corresponding physical channel according to an indication therein.

However, the PDCCH signaling itself is also carried on a physical resource for transmission. Using a 5 MHz bandwidth cell as an example, in a transmission time interval (Transmission Time Interval, "TTI" for short), usually there are only dozens of pieces of control signaling that can be carried and used for scheduling data of the user equipment, and the control signaling further includes uplink and downlink scheduling signaling. Therefore, usually only several to dozens of user equipments can be scheduled simultaneously within a TTI.

A heterogeneous network (Heterogeneous Network, "HetNet" for short) scenario is an important network topology. However, in the HetNet scenario, a major problem is interference between cells, and especially interference to a control channel. In the heterogeneous network scenario, to reduce interference caused by other cells to a cell, it is possible that control signaling can be sent through a PDCCH in only some subframes but cannot be sent in other subframes. In this case, the capacity of the PDCCH is further limited.

However, as a large number of intelligent equipments are used, more and more services requiring transmitting small packets emerge in the network, for example, Tencent QQ, Microsoft Service Network (Microsoft Service Network, "MSN" for short), and Twitter (Twitter). The small data packets of the services have features of a small data amount, a large number of packets, a long packet interval, and so on. Therefore, multiple small packets cannot be accumulated for simultaneous transmission. Therefore, when a large number of uplink small packets are transmitted, the utilization of the PDCCH is reduced greatly, overheads of the PDCCH are increased, and the problem that the capacity is limited due to the PDCCH limitation occurs in the system.

A patent application CN 101500309A discloses a method of a base station to allocate a dedicated scheduling request resource to a user equipment. In details, the base station determines at least one dedicated scheduling request resource for the user equipment, and set an identifier of the dedicated scheduling request resource to remainder bits of a MAC sub-header in a MAC PDU which will be sent to the user equipement.

Another patent application CN 101888700A discloses a method for configuring a parameter. In the method, a base station determines a parameter value corresponding to the smaller data transmission capability of the data transmission capability of the base station and the data transmission capability of a UE, according to the preset correspondence between data transmission capabilities and parameter values. Te base station configures parameters according to the determined parameter value, and notifies the UE of the parameter configuration information by means of RRC signalling.

Another patent application EP 2658338A1 discloses a group-based scheduling method, where a UE obtains a group scheduling identity indicating a group scheduled by a control signalling on a PDCCH, receives scrambled control signalling on the PDCCH, and decode the scrambled control signalling according to the group scheduling identity. Then, the UE receives a MAC PDU including a data packet of at least one UE in one group according to the decoded control signalling, obtains PUCCH feedback resource position corresponding to a position of a data packet of the UE according to a corresponding relation between a position of the data packet of the at least one UE in the MAC PDU and the PUCCH feedback resource position, and then sends ACK feedback information at the corresponding PUCCH feedback resource position.

Another patent application US 2007/253421A1 discloses a method for communicating data include concatenating sub-packets designated, respectively, for a first user device and a second user device to form a multiplexed data frame. A control channel message is produced to indicate that the first and second user devices have sub-packets in the multiplexed data frame. The control channel message is sent for transmission on a shared control channel, and the multiplexed data frame is sent for transmission on a data channel. The multiplexed data frame can be encoded. The shared control channel message can include a group ID and intra-group data for notifying user devices with an assigned group ID and intra-group ID. The intra-group data can include a bit mapped field having bits corresponding to the intra-group IDs.

### SUMMARY

Embodiments of the present invention provide a method, base station, and user equipment for transmitting scheduling information, which can save overheads of a control channel, improve utilization of resources, and mitigate the problem that the capacity of the control channel is limited.

The present invention is defined by the appended claims.

Based on the above technical solutions, by using the method, base station, and user equipment of the embodiments of the present invention, scheduling information of at least one scheduled user equipment is encapsulated in a MAC PDU, and control signaling carried by a control channel is used to schedule the MAC PDU. Thereby, scheduling information can be transmitted in a group-based scheduling mode, which can save overheads of the control channel, improve utilization of resources, and mitigate the problem that the capacity of the control channel is limited.

### BRIEF DESCRIPTION OF DRAWINGS

To illustrate the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a format of a MAC PDU subheader and a MAC PDU;
FIG. 2 is a schematic flowchart of a method for transmitting scheduling information according to an embodiment of the present invention;
FIG. 3 is another schematic flowchart of a method for transmitting scheduling information according to an embodiment of the present invention;
FIG. 4 is a schematic diagram of transmitting scheduling information according to an embodiment of the present invention;
FIG. 5A to FIG. 5G are schematic diagrams of formats of an MAC PDU subheader and a MAC PDU according to embodiments of the present invention;
FIG. 6 is a schematic flowchart of a method for transmitting scheduling information according to another embodiment of the present invention;
FIG. 7 is another schematic flowchart of a method for transmitting scheduling information according to another embodiment of the present invention;
FIG. 8A to FIG. 8E are schematic diagrams of transmitting scheduling information according to another embodiment of the present invention;
FIG. 9 is a schematic block diagram of a base station according to an embodiment of the present invention;
FIG. 10 is another schematic block diagram of a base station according to an embodiment of the present invention;
FIG. 11 is a schematic block diagram of a user equipment according to an embodiment of the present invention; and
FIG. 12 is another schematic block diagram of a user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be understood that the technical solutions of the present invention are applicable to various communication systems, for example, a global system for mobile communications (Global System of Mobile communication, "GSM" for short) system, a code division multiple access (Code Division Multiple Access, "CDMA" for short) system, a wideband code division multiple access (Wideband Code Division Multiple Access, "WCDMA" for short) system, a general packet radio service (General Packet Radio Service, "GPRS" for short), a long term evolution (Long Term Evolution, "LTE" for short) system, an LTE frequency division duplex (Frequency Division Duplex, "FDD" for short) system, an LTE time division duplex (Time Division Duplex, "TDD" for short) system, and a universal mobile telecommunication system (Universal Mobile Telecommunication System, "UMTS" for short).

It should also be understood that in the embodiments of the present invention, a user equipment may be referred to as a terminal (Terminal), a mobile station (Mobile Station, "MS" for short), a mobile terminal (Mobile Terminal), and so on. The user equipment may communicate with one or more core networks through a radio access network (Radio Access Network, "RAN" for short). For example, the user equipment may be a mobile phone (or referred to as a "cellular" phone) or a computer equipped with a mobile terminal. For example, the user equipment may also be a portable, pocket-sized, handheld, computer-embedded, or vehicle-mounted mobile apparatus, which exchanges voice and/or data with the radio access network.

In the embodiments of the present invention, a base station may be a base station (Base Transceiver Station, "BTS" for short) in the GSM or CDMA, or may also be a base station (NodeB, "NB" for short) in the WCDMA, or may also be an evolved base station (evolutional Node B, "eNB or e-NodeB" for short) in the LTE. The present invention does not limit the base station. However, for ease of description, the following embodiments use a user equipment (UE) and a base station (eNB) as an example for description.

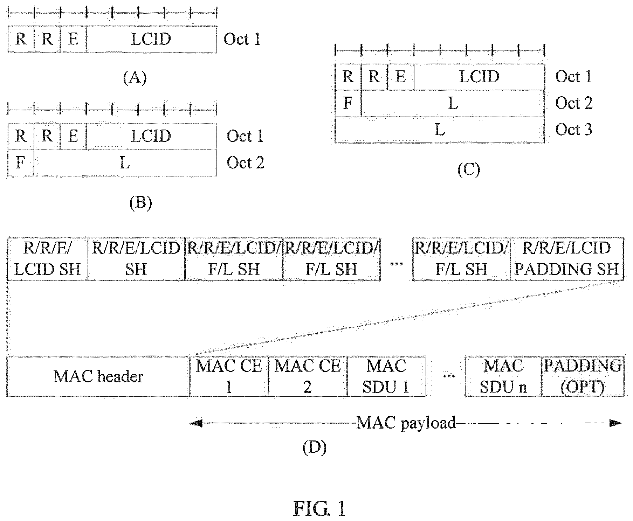

FIG. 1 is a schematic diagram of a format of a media access control (Media Access Control, "MAC" for short) protocol data unit (Protocol Data Unit, "PDU" for short) subheader and a MAC PDU. As shown in FIG. 1, usually within a transmission time interval (Transmission Time Interval, "TTI" for short), a basic transmission unit of a MAC layer is a MAC PDU. One MAC PDU is formed by a MAC header (MAC Header), zero or at least one MAC control element (Control Elements, "CE" for short), zero or at least one MAC service data unit (Service Data Unit, "SDU" for short), and optional data padding. One MAC header is formed by at least one MAC PDU subheader (SubHeader, "SH" for short), and one MAC PDU SH corresponds to one MAC CE or one MAC SDU or data padding.

One MAC PDU SH is formed by R/R/E/LCID/F/L. However, the last MAC PDU SH in the MAC header or the MAC PDU SH corresponding to the MAC CE includes only R/R/E/LCID. R represents a reserved bit (Reserved); E represents an extension bit (Extension), and indicates whether a MAC PDU SH exists after the MAC PDU SH; LCID represents a logical channel identity (Logical Channel Identity); F represents a format (Format), and indicates the size of a subsequent L field; L represents a length (Length), and indicates the length of the MAC SDU or MAC CE corresponding to the MAC PDU SH. It should be noted that Oct (Octet) in FIG. 1 represents an octet.

The LCID field has different meanings for the MAC CE, MAC SDU, and data padding. For the MAC CE and data padding, the corresponding LCID represents the type of the MAC CE. For the MAC SDU, the corresponding LCID represents a logical channel number of data carried by the MAC SDU. Specifically, the meaning of an LCID of a downlink shared channel is shown in Table 1:

**Table 1**

| Index (INDEX) | LCID Value |
|---|---|
| 00000 | Common control channel (Common Control Channel, "CCCH" for short) |
| 00001-01010 | Logical channel identity |
| 01011-11011 | Reserved identity |
| 11100 | Contention resolution identity of a user equipment |
| 11101 | Timing advance command |
| 11110 | Discontinuous reception command |
| 11111 | Padding (PADDING) |

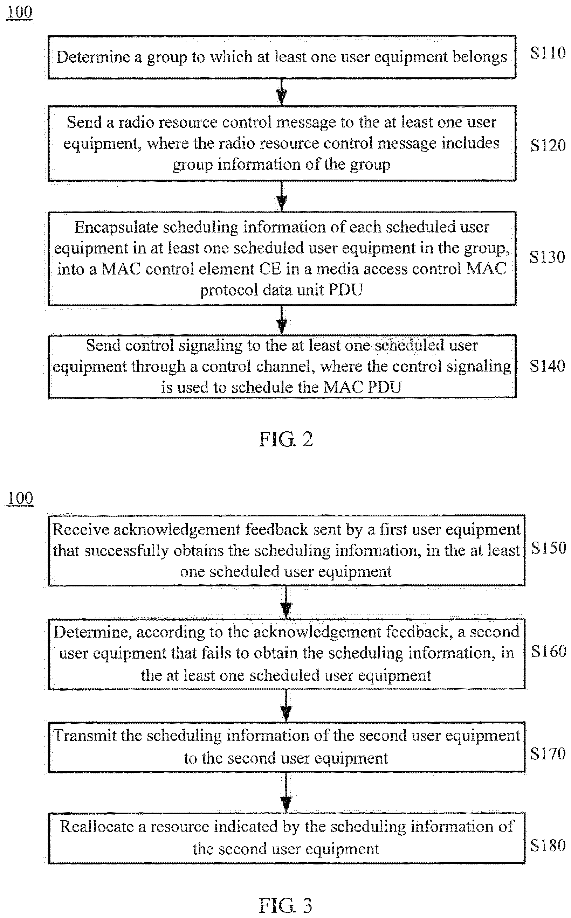

FIG. 2 is a schematic flowchart of a method 100 for transmitting scheduling information according to an embodiment of the present invention. As shown in FIG. 2, the method 100 includes the following:
S110. Determine a group to which at least one user equipment belongs.
S120. Send a radio resource control (Radio Resource Control, "RRC" for short) message to the at least one user equipment, where the radio resource control message includes group information of the group.
S130. Encapsulate scheduling information of each scheduled user equipment in at least one scheduled user equipment in the group, into a MAC CE in a MAC PDU.
S140. Send control signaling to the at least one scheduled user equipment through a control channel, where the control signaling is used to schedule the MAC PDU.

To improve utilization of the control channel and reduce overheads of the control channel, a base station may group user equipments, and notify a group message to each user equipment. When transmitting a scheduling message, the base station may encapsulate scheduling information of at least one scheduled user equipment into a MAC PDU, and use control signaling to perform scheduling. Therefore, once piece of control signaling may be used to schedule multiple user equipments, thereby saving control channel resources and improving utilization of resources.

Therefore, by using the method of the embodiment of the present invention, scheduling information of at least one scheduled user equipment is encapsulated in a MAC PDU, and control signaling carried by a control channel is used to schedule the MAC PDU. Thereby, scheduling information can be transmitted in a group-based scheduling mode, which can save overheads of the control channel, improve utilization of resources, and mitigate the problem that the capacity of the control channel is limited.

In S110, the base station may group user equipments according to factors such as link status and service related information. For example, the base station may group UEs having similar downlink quality into a group, or may also group UEs having a centralized service burst into a group, or may also group UEs having similar service features into a group. It should be noted that the grouping method actually used by the base station includes but is not limited to the methods described above. The base station may use one of the methods, or may also use a combination of a part or all of the methods.

It should be understood that when the base station uses a specific method for grouping, if the base station finds that UEs previously grouped in a group can no longer continue to be grouped in the same group, the base station may regroup the UEs, and modify the original group information.

In the embodiment of the present invention, the UE may join a group or exit a group, where the operation may be implemented by using an RRC message or other messages. In addition, as a particular example, if all UEs in the cell may belong to a same group, that is, the group is valid in the whole cell range, a used group identity, radio network temporary identifier (Radio Network Temporary Identifier, "RNTI" for short), may be configured statically in a protocol, or may also be notified in a broadcast message, or may also be configured by using an RRC message or other messages. In theory, the group identity may also be an existing P-RNTI used for paging and/or an SI-RNTI used for broadcasting. When the P-RNTI and/or SI-RNTI is used as a group identity, the UE may make feedback according to an indication and/or based on requirements only when the UE receives data (MAC SDU or MAC CE) specific to the UE. In this case, a MAC PDU subheader needs to be added to indicate which is a paging or broadcast message and which is data specific to the UE.

In S120, the group information includes a group identity and a position of the user equipment in the group. Optionally, the group information further includes scheduling mode information, where the scheduling mode information is used to indicate whether a group scheduling mode is used. For example, the base station allocates an identity, Group-C-RNTI, used for group scheduling.

It should be understood that the position of the user equipment in the group may include the serial number or relative position of the user equipment in the group. It should also be understood that the RRC message used for notifying the group information may be an existing RRC message, for example, an RRC Connection Reconfiguration (RRC Connection Reconfiguration) message, or may also be a newly added RRC message. A parameter in an existing message, a newly added parameter, or some fields in the existing parameter may be used for indicating a specific sending parameter in the group information.

The RRC messages and indication parameters are names used only for ease of description, and the applicability of the embodiment of the present invention is not limited thereto, that is, there may be no similar names in some systems, but it cannot be considered that the technical solution of the embodiment of the present invention is inapplicable to those systems.

In S130, after the base station completes grouping of user equipments, the base station obtains, according to a received buffer status report (Buffer Status Report, "BSR" for short) reported by at least one UE in the group or according to a downlink data transmission condition of at least one UE in the group, an uplink data buffer and transmission condition of the at least one UE, and is ready to transmit scheduling information to the at least one UE. In the embodiment of the present invention, the eNB uses scheduling information of each UE in the at least one scheduled UE as a MAC CE, and encapsulates MAC CEs carrying the scheduling information of each UE into a MAC PDU. Each MAC CE may indicate scheduling information of a user equipment, namely, an uplink grant (UpLink Grant, "UL Grant" or "ULG" for short), where the UL Grant may include a physical resource allocated to the corresponding UE, an MCS to be used, the size of the transmitted MAC PDU, transmission time for sending data by the UE by using the resource, and so on.

In S140, the base station may use a piece of PDCCH control signaling to schedule the MAC PDU carrying scheduling information of at least one scheduled user equipment. The PDCCH control signaling may be masked by an identity, Group-C-RNTI, and transmitted in a common search space. Therefore, scheduling information of multiple user equipments may be transmitted by using a piece of PDCCH control signaling, which can save overheads of the control channel, improve utilization of resources, and mitigate the problem that the capacity of the control channel is limited.

In the embodiment of the present invention, as shown in FIG. 2, the method 100 for transmitting scheduling information may further include the following:
S150. The base station receives acknowledgement feedback sent by a first user equipment that successfully obtains the scheduling information, in the at least one scheduled user equipment.
S160. The base station determines, according to the acknowledgement feedback, a second user equipment that fails to obtain the scheduling information, in the at least one scheduled user equipment.
S170. The base station transmits the scheduling information of the second user equipment to the second user equipment.

In the embodiment of the present invention, the base station receives acknowledgement feedback sent by a first user equipment that successfully obtains the scheduling information, in the at least one scheduled user equipment. That is, the user equipment sending the acknowledgement feedback not only decodes downlink data in a shared channel successfully, but also determines that the corresponding MAC CE in the obtained MAC PDU includes the scheduling information of the user equipment. That is, if the UE fails to decode the data packet, the UE may discard the data packet without feedback; if the UE decodes the data packet successfully but determines that no scheduling information specific to the UE exists, the UE also does not need to make feedback.

After receiving the feedback of the first user equipment, the base station may determine second user equipments that do not receive the scheduling information correctly, and retransmit the scheduling information of the second user equipments. When retransmitting the scheduling information, the base station may recombine scheduling information of other user equipments in the group and send the scheduling information, without being limited to the previous sending combination, and may also send scheduling information of the second user equipments separately. Because the retransmitted data packet in the method of the embodiment of the present invention cannot be combined and decoded, and only a time diversity gain is obtained by retransmission, the retransmitted data packet does not need to be marked as a retransmitted packet.

In addition, if the base station determines mistakenly that the acknowledgement feedback (ACK) is negative acknowledgement feedback (NACK), because the UE scheduled in the group can only send an ACK, the base station still determines the received negative acknowledgement feedback NACK as an ACK.

It should be understood that the first user equipment refers to one or more user equipments successfully obtaining the scheduling information, in the at least one scheduled user equipment in the group. Similarly, the second user equipment refers to one or more user equipments failing to obtain the scheduling information, in the at least one scheduled user equipment in the group.

Optionally, when the base station determines that the second user equipment fails to obtain the scheduling information, the method 100 further includes the following:
S180. When determining that the second user equipment fails to obtain the scheduling information, the base station reallocates a resource indicated by the scheduling information of the second user equipment.

For example, if the base station does not receive the feedback of the UE within a predetermined time interval, to make full use of resources, the base station may recycle the resource indicated by the scheduling information of the UE and reallocate the resource. In this case, the scheduling time indicated by the scheduling information configured by the base station for the UE needs to be set to enable the base station to reallocate the resource.

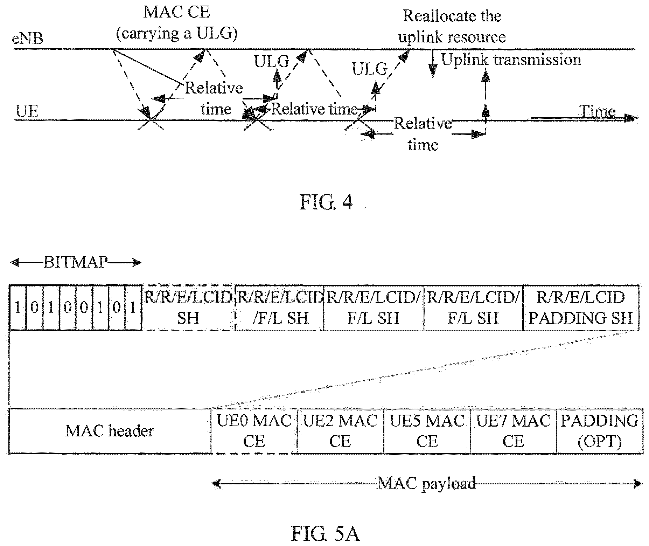

Specifically, the scheduling time in the MAC CE for instructing the UE to use the UL Grant to perform uplink transmission may be absolute time, for example, a system frame number (System Frame Number, "SFN" for short) plus subframe (Sub Frame). The scheduling time may also be relative time, for example, time relative to sending the MAC CE by the eNB, or time relative to receiving the MAC CE successfully by the UE, or time relative to feeding back the ACK by the UE after successfully receiving the MAC CE, and so on; the scheduling time may be in units of TTIs. If the scheduling time is time relative to successfully receiving the MAC CE by the UE, or time relative to feeding back the ACK by the UE after successfully receiving the MAC CE, typically, the scheduling time may be set to indicate that the eNB is allowed to reallocate the resource to other user equipments after the eNB receives the ACK or NACK, and may be set to be later than the time when the user equipment uses the UL Grant, so that after the scheduling information of the UE fails to be transmitted finally, the eNB can reallocate the resource indicated by the scheduling information, as shown in FIG. 4.

It should be understood that the values of the sequence numbers in the above processes do not mean the execution sequence; the execution sequence of each process should be determined by the function and internal logic of the process, and shall not be construed as a limitation to the implementation process of the embodiment of the present invention. For example, S180 may be executed before S170, or S 170 may be executed before S180.

Therefore, by using the method of the embodiment of the present invention, scheduling information of at least one scheduled user equipment is encapsulated in a MAC PDU, and control signaling carried by a control channel is used to schedule the MAC PDU. Thereby, scheduling information can be transmitted in a group-based scheduling mode, which can save overheads of the control channel, improve utilization of resources, and mitigate the problem that the capacity of the control channel is limited.

In the embodiment of the present invention, the number of control channel elements (Control Channel Element, "CCE" for short) carrying the control signaling is determined by the number of the at least one scheduled user equipment. Optionally, the number of CCEs carrying the control signaling is the same as the number of the at least one scheduled user equipment. That is, the size of the physical resource occupied by one piece of PDCCH control signaling in the common search space may be one or more CCEs. For example, when the number of UEs to be scheduled simultaneously is 2, a PDCCH command occupying two CCEs may be used for scheduling to further improve the utilization of the PDCCH.

It should be understood that the size of the physical resource occupied by one piece of PDCCH control signaling in the common search space is 4 control channel elements (Control Channel Element, "CCE" for short) or 8 CCEs in the related technology. However, according to the technical solution used by the embodiment of the present invention, the number of CCEs occupied by the PDCCH control signaling in the common search space may be determined according to the number of user equipments simultaneously scheduled that is, when the group scheduling mode in the embodiment of the present invention is used, the number of CCEs occupied by one piece of PDCCH control signaling may also be 2, 3, 5, 6, or other values. Therefore, the embodiment of the present invention can reduce the limitation on the number of CCEs occupied by the PDCCH control signaling, transmit scheduling information more flexibly, improve utilization of the PDCCH, and mitigate the problem that the capacity of the PDCCH is limited.

In addition, at present, the size of the common search space is 16 CCEs. To schedule more groups within a same transmission time interval (Transmission Time Interval, "TTI" for short), in the embodiment of the present invention, the size of the space may also be changed, for example, the size of the common search space is increased from 16 CCEs to 20 CCEs or any other number of CCEs. Of course, the number of CCEs included in the common search space cannot exceed the total number of available CCEs. In addition, in another aspect, the size of the common search space may be reduced based on requirements.

In the embodiment of the present invention, in addition to the existing common space, a group scheduling space used for group scheduling may be defined, where the group scheduling space includes the size and position of the space and so on. The group scheduling space may be shared by all groups; or different groups have different scheduling spaces, where the scheduling spaces of different groups may also overlap in theory, and the sizes of scheduling spaces may be the same or different. Information related to the group scheduling space may be configured for specific UEs in a specific group by using an RRC message. Of course, the information may also be configured in a protocol statistically. In addition, when the group scheduling space is used, one piece of PDCCH control signaling sent in the group scheduling space may occupy one or more CCEs.

In the embodiment of the present invention, the RRC message sent by the base station to the UE may further include resource information used by the at least one scheduled user equipment for hybrid automatic repeat request (Hybrid Automatic Repeat request, "HARQ" for short) feedback. Optionally, the resource information includes the number of PUCCH resources used by the UE for HARQ feedback, and the position of the physical layer resource occupied by each PUCCH resource.

It should be understood that in the LTE system, a HARQ technology is used to ensure reliable transmission of data. After the eNB sends, on the PDCCH at TTI n, control signaling used by the UE for downlink data scheduling, the UE receives downlink data on the corresponding physical downlink shared channel (Physical Downlink Share Channel, "PDSCH" for short) according to the scheduling signaling indication. In addition, HARQ feedback is transmitted on the PUCCH at TTI n+4, notifying the eNB whether the data is successfully received. However, the PUCCH resource used by the UE is related to the physical resource occupied by the PDCCH used for current scheduling. Usually, a main factor used for calculating the current PUCCH feedback resource is the position of the first CCE occupied by the PDCCH corresponding to current scheduling.

Usually, the size of the physical resource occupied by one piece of PDCCH control signaling in the common search space is 4 control channel elements (Control Channel Element, "CCE" for short) or 8 CCEs. In order for the scheduled UEs to calculate physical uplink control channel (Physical Uplink Control Channel, "PUCCH" for short) resources to be used, the number of UEs simultaneously scheduled by the eNB is related to the number of resources occupied by the configured PDCCH. That is, no matter how many UEs are in one group, if the resource occupied by the PDCCH sent by the eNB in the common search space at a time point is 4 CCEs, the number of UEs scheduled by the eNB simultaneously at the TTI should be not greater than 4, so as to ensure that all UEs can calculate and use the corresponding PUCCH resources to feed back the ACK. If the resource occupied by the PDCCH is 8 CCEs, the number of UEs scheduled by the eNB simultaneously at the TTI should be not greater than 8, so as to ensure that all UEs can calculate and use the corresponding PUCCH resources to feed back the ACK.

In the embodiment of the present invention, the UE calculates, according to the position where the UE itself is scheduled and the position of the CCE occupied by sending PDCCH control signaling used for group scheduling, PUCCH resources used for uplink HARQ ACK feedback. For the mode of obtaining PUCCH resources, optionally, the PUCCH resources that are reserved for the group and used by the UE for feedback may be notified to the UE by using an RRC message. The resource information includes the number of PUCCH resources used by the UE for HARQ feedback, and the position of the physical layer resource occupied by each PUCCH resource.

The number of reserved PUCCHs is related to the number of UEs that can be sent simultaneously in the group, where the number of such UEs is decided by the eNB, that is, if the eNB decides that data packets of 4 UEs can be transmitted simultaneously in the group, the number of PUCCHs reserved for the group is 4. In addition, when the eNB decides to change the number of UEs that can be transmitted simultaneously in the group, the reserved PUCCH resources may be changed by using an RRC message. When the UE needs to make HARQ-ACK feedback, the UE determines, according to the position where the UE itself is scheduled and the reserved PUCCH resources received through an RRC message, the PUCCH actually used by the UE, thereby making HARQ feedback.

Understandably, for the problem that the UE sends a HARQ-ACK on the PUCCH resources, it should be noted that whether to use PUCCH multi-antenna transmit diversity may be configured for the UE in the LTE release 10 (Rel-10) standard. If the mechanism is configured, when the UE sends HARQ feedback on the PUCCH, 2 PUCCHs need to be occupied; if the mechanism is not configured, only 1 PUCCH is occupied for feedback. For simplicity, it may be specified that no matter whether the UE is configured with the PUCCH multi-antenna transmit diversity mechanism, a common PUCCH transmit mechanism is used in the case of group scheduling, that is, only 1 PUCCH is used to send a HARQ-ACK. However, when the UE in a group uses dedicated scheduling at a TTI, the specifically used PUCCH transmit mechanism is executed according to the mode actually configured for the UE, that is, if the PUCCH multi-antenna transmit diversity is configured, the multi-antenna transmit mode is used, or if the PUCCH multi-antenna transmit diversity is not configured, a common transmit mode is used.

In the embodiment of the present invention, the base station may select a part of the UEs for feedback without requiring all UEs for feedback. Therefore, within a TTI, data of more UEs can be scheduled, without being limited by the number of CCEs occupied by the PDCCH control signaling. The information about the UE that needs to make feedback may be indicated by a MAC PDU. Therefore, in the embodiment of the present invention, the MAC PDU may further include user equipment information, where the user equipment information is used to indicate a user equipment that needs to make HARQ feedback, in the at least one scheduled user equipment.

Specifically, after the number of UEs scheduled by the eNB at a TTI by using the PDCCH exceeds the number of CCEs occupied by the PDCCH, the eNB may select one or several UEs for feedback. The eNB judges, according to the feedback of the one or several UEs, whether it is necessary to retransmit the corresponding data. For example, the method for the eNB to determine which UE or UEs need to make feedback may be:
Method 1: The base station determines, according to the number of CCEs occupied by the PDCCH, that the first several UEs need to make feedback after the UEs successfully receive their data. That is, after the UEs whose scheduled data in the position of the MAC PDU can be mapped to the corresponding PUCCH receive data successfully, the UEs need to make feedback; but even if the UEs whose scheduled data in the position of the MAC PDU cannot be mapped to the corresponding PUCCH receive data successfully, the UEs do not make feedback. If the number of CCEs occupied by the PDCCH is 4 but the number of scheduled UEs is 6, only the first 4 UEs can make feedback, but the last two UEs cannot make feedback because they cannot find the corresponding feedback resources.
Method 2: The base station specifies which UE or UEs need to make feedback, and a UE that has successfully received data makes feedback or does not make feedback according to an indication. Optionally, in the MAC PDU, the eNB indicates information about the UE that needs to make feedback, for example, sets a flag indicating whether to make feedback for each scheduled UE, where the flag may occupy one reserved bit (bit) in the MAC PDU. In addition, the UE that needs to make feedback may be indicated by an RRC message, for example, the RRC message may further include the ID of the UE that needs to make feedback, and/or the relative position of the UE in the MAC PDU, for example, an odd-number position, an even-number position, the first position, or the last position, which will not be further enumerated. Correspondingly, after successfully receiving its data, the UE makes feedback or does not make feedback according to the indication.

After receiving the feedback, the eNB performs a subsequent operation, for example, retransmission or packet discarding, which depends on the specific implementation of the eNB. For example, the eNB instructs one or several UEs of the worst channel condition to make feedback. If all the UEs feed back ACKs, it is considered that data of other UEs that are not instructed to make feedback is also successfully received. Or, if the several UEs do not feed back ACKs, it is considered that data of other UEs is not successfully sent and needs to be retransmitted. Or, as long as there is a UE that needs to but does not feed back an ACK, data of all UEs that do not feedback the ACK and those that cannot feed back the ACK is rescheduled, and so on.

It should be understood that because an indication is added in the embodiment of the present invention, the problem of possible resource collisions even if the corresponding feedback resource can be mapped according to the position of the CCE in the related technology can be solved. However, a problem caused by the solution is that the eNB cannot accurately know the data reception condition of all UEs, which may increase packet loss or unnecessary retransmission. Of course, because group scheduling is used in the embodiment of the present invention, the eNB may use a relatively conservative modulation and coding scheme, and properly design the UE that needs to make feedback, thereby greatly reducing the possibility of misjudgment by the eNB. Therefore, the embodiment of the present invention breaks the limitation on the number of scheduled UEs by the number of CCEs occupied by the PDCCH, thereby further optimizing use of the PDCCH and scheduling more UEs.

It should be noted that in the embodiment of the present invention, even if the number of the scheduled UEs does not exceed the number of CCEs occupied by the PDCCH, the eNB may also indicate which UEs need to make feedback. Moreover, in addition to indicating the information about which UE or UEs need to make feedback, the eNB may instruct the corresponding UE to make feedback on a PUCCH channel corresponding to the position of which CCE, instead of selecting the PUCCH channel corresponding to the CCE to make feedback according to the position of the data of the UE in the whole MAC PDU.

In the embodiment of the present invention, the MAC CE of the MAC PDU is used to carry scheduling information of the scheduled user equipment. To indicate the content carried by the MAC CE, optionally, a logical channel identity LCID of a MAC PDU subheader corresponding to the MAC CE carrying scheduling information is used to indicate that the MAC CE carries scheduling information. For example, as shown in Table 2, a reserved index 11011 may be used to indicate that the MAC CE corresponding to the MAC PDU subheader carries scheduling information. Correspondingly, the UE may determine, according to the index 11011, that the content carried in the corresponding MAC CE is scheduling information.

**Table 2**

| Index (INDEX) | LCID Value |
|---|---|
| 00000 | CCCH |
| 00001-01010 | Logical channel identity |
| 01011-11010 | Reserved identity |
| 11011 | Scheduling information (Scheduling Information) |
| 11100 | Contention resolution identity of a user equipment |
| 11101 | Timing advance command |
| 11110 | Discontinuous reception command |
| 11111 | Padding |

In the embodiment of the present invention, a MAC PDU subheader, a MAC CE, and so on may be used to indicate which user equipment corresponds to the scheduling information carried by the MAC CE. Optionally, a header of the MAC PDU includes a fixed length of bits, where the bits are used to indicate the scheduled user equipments in the group. Optionally, the MAC PDU includes a MAC CE carrying a variable-length bitmap indication, where the bitmap indication is used to indicate the scheduled user equipments in the group. Optionally, a reserved field or an extension field of a MAC PDU subheader corresponding to a MAC CE carrying scheduling information carries an identity of a user equipment corresponding to the scheduling information. Optionally, the MAC PDU includes MAC CEs carrying identities of the scheduled user equipments in the group. The following uses a specific example for description.

As shown in FIG. 5A, the header of the MAC PDU may include a fixed length of bits, where the bits are used to indicate the scheduled user equipments in the group. For example, a fixed-length bitmap (bitmap) indication of, for example, 8 bits, may be added at the beginning of the MAC header. Each bit represents one UE, where 1 may be used to indicate that data of the UE exists, and 0 may be used to indicate that no data of the UE exists. The total number of bits is equal to the number of user equipments in the group. The sequence of the bitmap indication is related to the positions configured by the eNB for the UEs in the group by using an RRC message. As shown in FIG. 5A, it indicates that data of UEs corresponding to UE0, UE2, UE5, and UE7 is scheduled. User data of one UE may be one MAC SDU, or may also be one MAC CE, and data of each UE only includes one MAC SDU or one MAC CE.

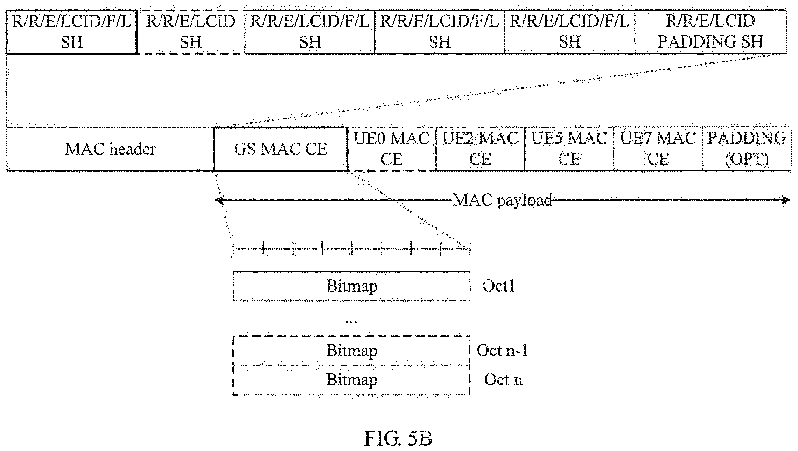

As shown in FIG. 5B, the MAC PDU includes a MAC CE carrying a variable-length bitmap indication, where the bitmap indication is used to indicate the scheduled user equipments in the group.

For example, the Bitmap may be used as a MAC CE to be included in the MAC PDU, and is indicated by an R/R/E/LCID/F/L subheader. As shown in Table 3, an LCID value may be added, namely, group scheduling (Group Scheduling). The specific format of the MAC CE is shown in FIG. 5B. Different from other MAC CEs, to indicate the size of the variable-length MAC CE, the corresponding MAC PDU subheader SH (SubHeader) includes R/R/E/LCID/E/L fields, where the L field indicates the length of the Group Scheduling MAC CE, and the MAC CE is placed before all MAC CEs. The sequence of the Bitmap indication is related to the positions configured by the eNB for the UEs in the group by using an RRC message.

**Table 3**

| Index (INDEX) | LCID Value |
|---|---|
| 00000 | CCCH |
| 00001-01010 | Logical channel identity |
| 01011-11010 | Reserved identity |
| 11011 | Group scheduling |
| 11100 | Contention resolution identity of a user equipment |
| 11101 | Timing advance command |
| 11110 | Discontinuous reception command |
| 11111 | Padding |

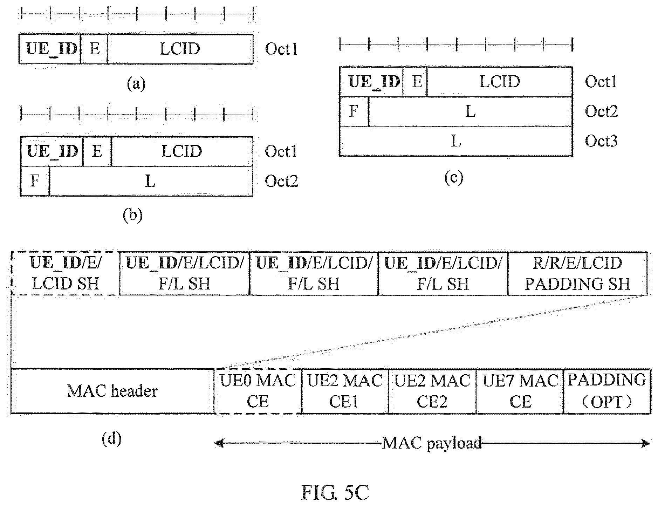

As shown in FIG. 5C to FIG. 5E, optionally, a reserved field or an extension field of a MAC PDU subheader corresponding to a MAC CE carrying scheduling information carries an identity of a user equipment corresponding to the scheduling information, a fixed-length UE_ID (2 bits).

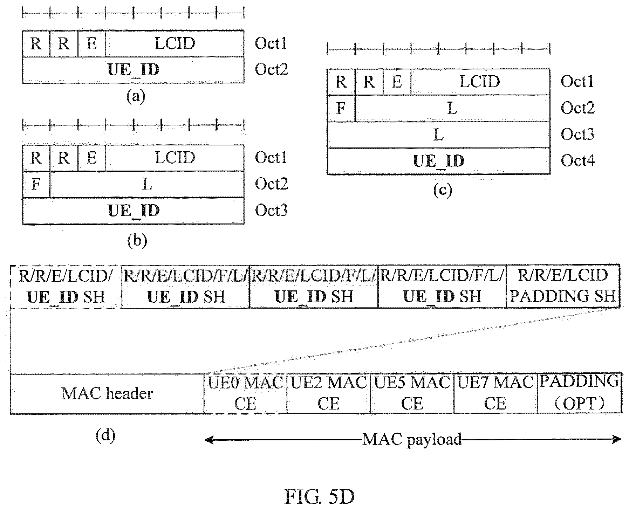

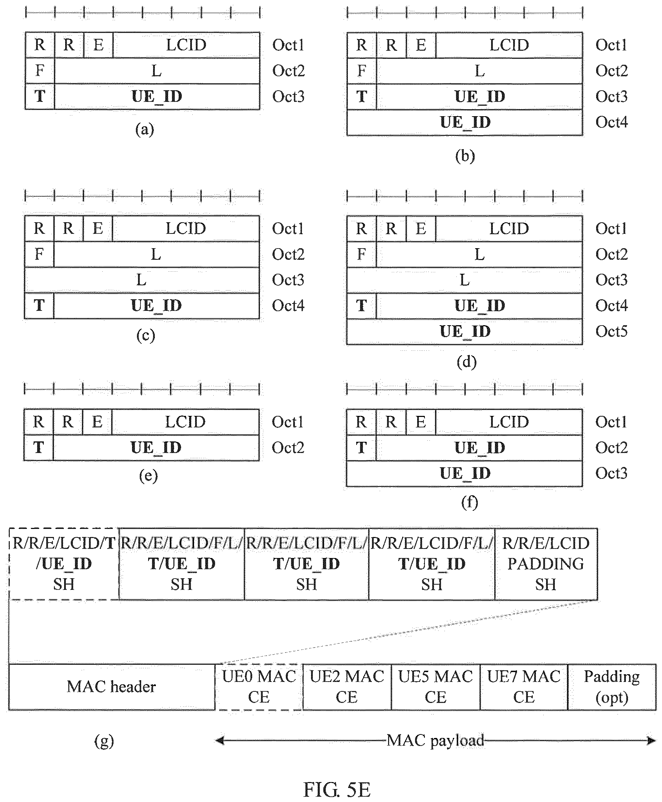

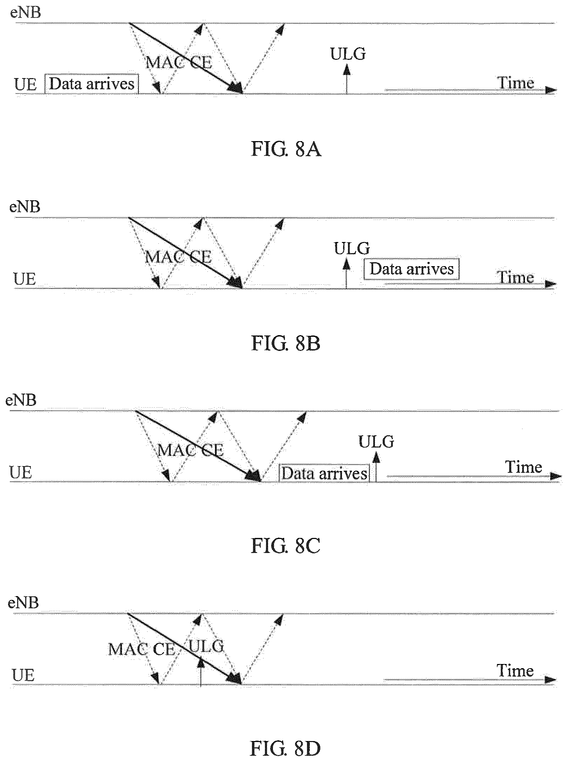

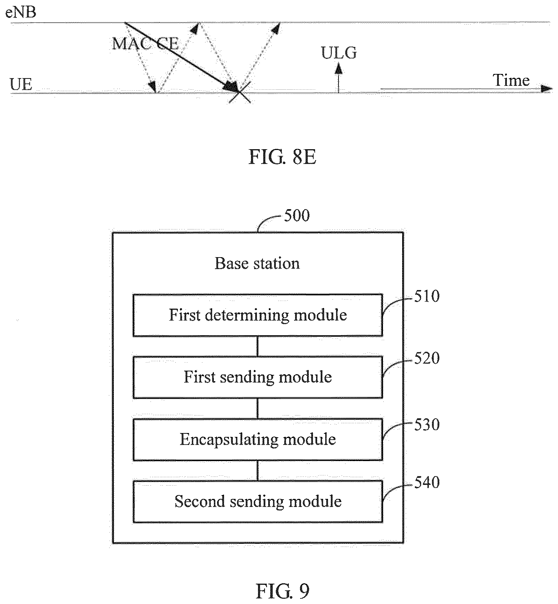

Specifically, as shown in FIG. 5C, two reserved bits in the current MAC PDU SH may be used to carry the identity of the scheduled user equipment (UE_ID). The identity UE_ID of the UE may be a serial number configured by the eNB for the UE in the group by using an RRC message, where the length of the bits carrying the identity is fixed and is 2 bits. As shown in FIG. 5D, 8 bits or 16 bits or more bits may be used to carry the identity UE_ID of the UE, where the identity may be a serial number configured by the eNB for the UE in the group by using an RRC message, where the length of the identity depends on the number of UEs in the group. However, once the number of extended bits is determined, the format is used for all UEs scheduled in the group. In the example shown in FIG. 5D, the bits carrying the identity of the UE are extended to 8 bits. As shown in FIG. 5E, two lengths of bits may be used, and the T field is used for identification, for example, 0 represents use of 7-bit bits, and 1 represents use of 15-bit bits. The UE_ID is equal to the serial number configured by the eNB for the UE in the group by using an RRC message in step 1. The identity of the UE may be the serial number configured by the eNB for the UE in the group by using an RRC message. It should be understood that multiple uplink grants of a same UE may appear in a same MAC PDU.

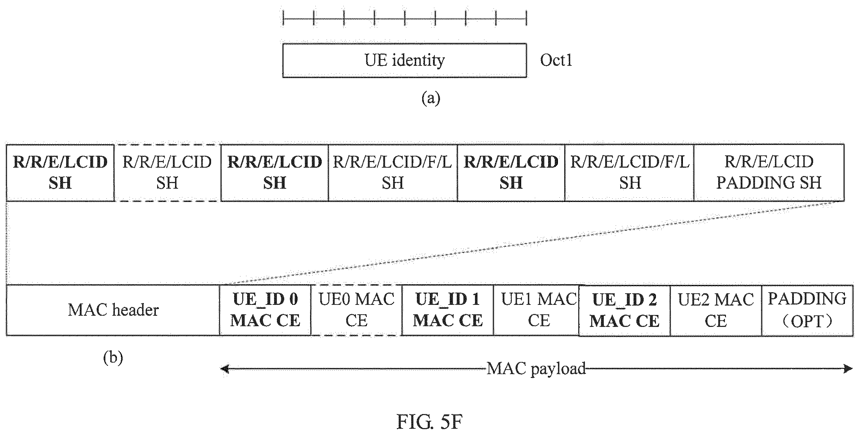

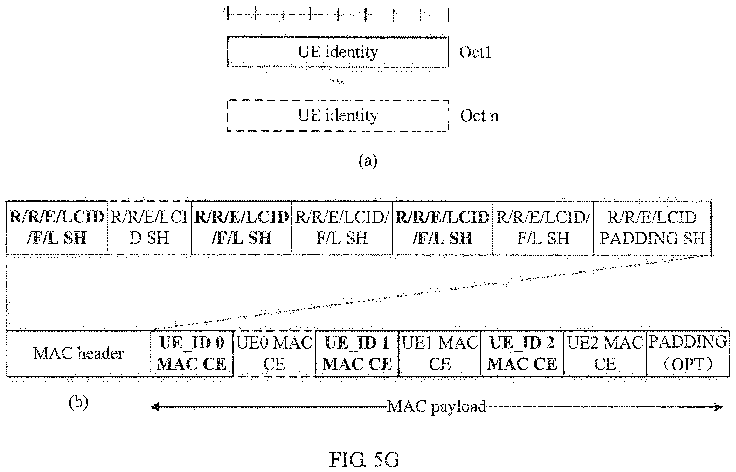

As shown in FIG. 5F and FIG. 5G, optionally, the MAC PDU includes MAC CEs carrying identities of the scheduled user equipments in the group.

Specifically, as shown in FIG. 5F, a new fixed-length MAC CE may be added to the MAC PDU and used to identify which UE the scheduling information carried by the corresponding MAC CE belongs to. The identity UE_ID of the user equipment is used as a MAC CE to be included in the MAC PDU, and is indicated by an R/R/E/LCID subheader. As shown in Table 4, an LCID value (UE identity, UE Identity) may be added to indicate the type of the MAC CE. The specific format of the MAC CE may be shown in (a) in FIG. 5F. The fixed length may be 8 bits, or may also be 16 bits or more bits. Once the fixed length is determined, the fixed length is used for all UEs scheduled in the group. Different from other MAC CEs, the MAC CE does not need to be placed at the beginning the MAC header, but is inserted before the MAC CE or MAC SDU indicated by the MAC CE subheader and/or MAC SDU subheader. Multiple uplink grants of a same UE may appear in a same MAC PDU.

**Table 4**

| Index (INDEX) | LCID Value |
|---|---|
| 00000 | CCCH |
| 00001-01010 | Logical channel identity |
| 01011-11010 | Reserved identity |
| 11011 | UE identity (UE Identity) |
| 11100 | Contention resolution identity of a user equipment |
| 11101 | Timing advance command |
| 11110 | Discontinuous reception command |
| 11111 | Padding |

Specifically, as shown in FIG. 5G, a new variable-length MAC CE may be added to the MAC PDU and used to identify which UE the scheduling information carried by the corresponding MAC CE belongs to. For example, the UE_ID may be used as a MAC CE to be included in the MAC PDU, and is indicated by an R/R/E/LCID/F/L subheader. As shown in Table 4, an LCID value (UE identity, UE Identity) may be added to indicate the type of the MAC CE. The specific format of the MAC CE is shown in (a) in FIG. 5G. Different from other MAC CEs, to indicate the size of the variable-length MAC CE, the corresponding MAC PDU SH may include R/R/E/LCID/E/L fields, where the L field indicates the length of the MAC CE in group scheduling. In addition, the MAC CE does not need to be placed at the beginning the MAC header, but is inserted before the MAC CE or MAC SDU indicated by the MAC CE subheader and/or MAC SDU subheader. Multiple uplink grants of a same UE may appear in a same MAC PDU.

By using the method of the embodiment of the present invention, scheduling information of at least one scheduled user equipment is encapsulated in a MAC PDU, and control signaling carried by a control channel is used to schedule the MAC PDU. Thereby, scheduling information can be transmitted in a group-based scheduling mode, which can save overheads of the control channel, improve utilization of resources, and mitigate the problem that the capacity of the control channel is limited.

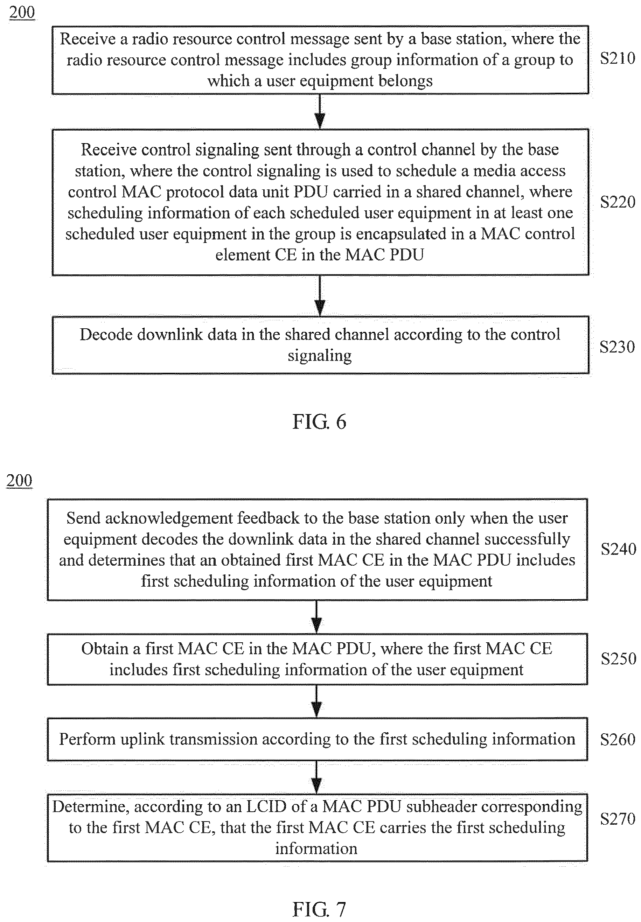

The method for transmitting scheduling information according to the embodiments of the present invention is described in the foregoing from the perspective of a base station with reference to FIG. 2 to FIG. 5G. The method for transmitting scheduling information according to the embodiments of the present invention is described in the following from the perspective of a user equipment with reference to FIG. 6 to FIG. 8E.

FIG. 6 is a schematic flowchart of a method 200 for transmitting scheduling information according to another embodiment of the present invention. As shown in FIG. 6, the method 200 includes the following:
S210. A UE receives a radio resource control message sent by a base station, where the radio resource control message includes group information of a group to which the user equipment belongs.
S220. The UE receives control signaling sent through a control channel by the base station, where the control signaling is used to schedule a media access control MAC protocol data unit PDU carried in a shared channel, where scheduling information of each scheduled user equipment in at least one scheduled user equipment in the group is encapsulated in a MAC control element CE in the MAC PDU.
S230. The UE decodes downlink data in the shared channel according to the control signaling.

Therefore, by using the method of the embodiment of the present invention, scheduling information of at least one scheduled user equipment is encapsulated in a MAC PDU, and control signaling carried by a control channel is used to schedule the MAC PDU. Thereby, scheduling information can be transmitted in a group-based scheduling mode, which can save overheads of the control channel, improve utilization of resources, and mitigate the problem that the capacity of the control channel is limited.

In S210, the base station may group user equipments according to factors such as link status and service related information. In addition, the UE may join a group or exit a group, where the operation may be implemented by using an RRC message or other messages. When the base station uses a specific method for grouping, if the base station finds that UEs grouped in a group cannot continue to be grouped in the same group, the base station may regroup the UEs, and modify the original group information.

Optionally, group information includes a group identity and a position of the user equipment in the group. Optionally, the group information further includes scheduling mode information, where the scheduling mode information is used to indicate whether a group scheduling mode is used. For example, the base station allocates an identity, Group-C-RNTI, used for group scheduling. It should be understood that the position of the user equipment in the group may include the serial number or relative position of the user equipment in the group. It should also be understood that the RRC message used for notifying group information may be an existing RRC message, for example, an RRC Connection Reconfiguration (RRC Connection Reconfiguration) message, or may also be a newly added RRC message.

In S220, in addition to the PDCCH control signaling masked by a cell-radio network temporary identifier (Cell-Radio Network Temporary Identifier, "C-RNTI" for short), the UE needs to monitor PDCCH control signaling specific to the UE and masked by the Group-C-RNTI in a common search space, and detect whether a group scheduling command to be sent exists.

In S230, after the UE receives the PDCCH control signaling specific to the UE and masked by the Group-C-RNTI, the UE receives and decodes PDSCH data according to the PDCCH indication. If the UE fails to decode a data packet at the MAC layer, the UE discards the data packet without making HARQ feedback. If the UE decodes the data packet successfully, after obtaining the MAC PDU, the UE determines, according to the indication in the MAC header, whether an uplink grant command specific to the UE exists, and if not, discards the MAC PDU without making HARQ feedback. If an uplink grant command specific to the UE exists, the UE determines the relative position of the UE in the scheduled UEs, or obtains, according to the indication of the UE identity UE_ID, the uplink grant command specific to the UE.

In the MAC PDU carrying the scheduling information, each MAC CE may indicate scheduling information of a user equipment, namely, an uplink grant (UpLink Grant, "UL Grant" or "ULG" for short), where the UL Grant includes a physical resource allocated to the corresponding UE, an MCS to be used, the size of the transmitted MAC PDU, and transmission time for sending data by the UE by using the resource.

Optionally, in the embodiment of the present invention, the number of control channel elements carrying the control signaling is determined by the number of the at least one scheduled user equipment. Optionally, the number of CCEs carrying the control signaling is the same as the number of the at least one scheduled user equipment. That is, the size of the physical resource occupied by one piece of PDCCH control signaling in the common search space may be one or more CCEs. For example, when the number of UEs to be scheduled simultaneously is 2, a PDCCH command occupying two CCEs may be used for scheduling to further improve the utilization of the PDCCH.

In the embodiment of the present invention, optionally, the method 200 further includes the following:
S240. The UE sends acknowledgement feedback to the base station only when the user equipment decodes the downlink data in the shared channel successfully and determines that an obtained first MAC CE in the MAC PDU includes first scheduling information of the user equipment.

That is, if the UE fails to decode the data packet, the UE may discard the data packet without feedback; if the UE decodes the data packet successfully but determines that no scheduling information specific to the UE exists, the UE also does not need to make feedback.

In the embodiment of the present invention, the UE may send acknowledgement feedback to the base station according to user equipment information included in the MAC PDU, where the user equipment information is used to indicate a user equipment that needs to make HARQ feedback, in the at least one scheduled user equipment. That is, the base station may select a part of the UEs for feedback without requiring all UEs for feedback. Therefore, within a TTI, data of more UEs can be scheduled, without being limited by the number of CCEs occupied by the PDCCH control signaling. The information about the UE that needs to make feedback may be indicated by a MAC PDU.

In the embodiment of the present invention, the UE calculates, according to the position where the UE itself is scheduled and the position of the CCE occupied by sending PDCCH control signaling used for group scheduling, PUCCH resources used for uplink HARQ ACK feedback. For the mode of obtaining PUCCH resources, optionally, the PUCCH resources that are reserved for the group and used by the UE for feedback may be notified to the UE by using an RRC message. That is, the radio resource control message further includes resource information used by the at least one scheduled user equipment for hybrid automatic repeat request HARQ feedback. The resource information includes the number of PUCCH resources used by the UE for HARQ feedback, and the position of the physical layer resource occupied by each PUCCH resource.

The number of reserved PUCCHs is related to the number of UEs that can be sent simultaneously in the group, where the number of such UEs is decided by the eNB, that is, if the eNB decides that data packets of 4 UEs can be transmitted simultaneously in the group, the number of PUCCHs reserved for the group is 4. In addition, when the eNB decides to change the number of UEs that can be transmitted simultaneously in the group, the reserved PUCCH resources may be changed by using an RRC message. When the UE needs to make HARQ-ACK feedback, the UE determines, according to the position where the UE itself is scheduled and the reserved PUCCH resources received through an RRC message, the PUCCH actually used by the UE, thereby making HARQ feedback.

In the embodiment of the present invention, optionally, as shown in FIG. 7, the method 200 further includes the following:
S260. The UE obtains a first MAC CE in the MAC PDU, where the first MAC CE includes first scheduling information of the user equipment.
S270. The UE performs uplink transmission according to the first scheduling information.

Optionally, before the obtaining, by the UE, a first MAC CE in the MAC PDU, the method 200 further includes the following:
S250. The UE determines, according to an LCID of a MAC PDU subheader corresponding to the first MAC CE, that the first MAC CE carries the first scheduling information.

For example, the UE may determine, according to the LCID value of the MAC PDU subheader, that the content carried in the corresponding MAC CE is scheduling information. In the case shown in Table 2, the UE may determine, according to the index 11011, that the content carried in the corresponding MAC CE is scheduling information.

In the embodiment of the present invention, the performing, by the UE, uplink transmission according to the first scheduling information may include:
if no uplink data to be sent exists before scheduling time indicated by the first scheduling information, and the first MAC CE is received before the scheduling time, sending, by the UE, a padding buffer status report BSR and/or a padding bit to the base station at the scheduling time; or
if uplink data to be sent exists after the first MAC CE is received and before the scheduling time, sending, by the UE, the uplink data and/or a BSR to the base station at the scheduling time.

The following provides specific description according to different cases with reference to FIG. 8A to FIG. 8E.

As shown in FIG. 8A, uplink data to be sent exists before the first MAC CE is received and before the scheduling time indicated by the first scheduling information; in this case, if there are uplink resources allocated by the eNB, the UE performs uplink transmission, or if there are no resources but a buffer status report (Buffer Status Report, "BSR" for short) is triggered, the procedure for requesting uplink resources is triggered, or if there are no uplink resources and no BSR is triggered, data and/or a BSR and/or Padding may be transmitted using the uplink grant (UL Grant). The processing procedure in this case is the same as the processing procedure where the UL Grant is used for uplink data transmission in the related technology.

As shown in FIG. 8B, if no uplink data to be sent exists before scheduling time indicated by the first scheduling information, and the first MAC CE is received before the scheduling time, the UE sends a padding buffer status report BSR and/or a padding bit to the base station at the scheduling time.

As shown in FIG. 8C, if uplink data to be sent exists after the first MAC CE is received and before the scheduling time, the UE sends the uplink data and/or a BSR to the base station at the scheduling time. Specifically, if no data exists before the UE receives the MAC CE but data to be sent exists after the UE receives the MAC CE, the UL Grant may be used for uplink data and/or BSR transmission according to the capability of the UE. For example, if new data has not arrived when the UE starts to assemble the MAC PDU for the corresponding ULGrant, only a Padding BSR and/or Padding can be sent using the ULGrant; if new data has arrived before the UE starts to assemble the MAC PDU for the corresponding ULGrant, the data can be transmitted. Optionally, because the UE has received the UL Grant carried in the MAC CE, even if the BSR process is triggered, the procedure for requesting uplink resources may also be not triggered, but the UL Grant is directly used to perform uplink data and/or BSR transmission.

As shown in FIG. 8D, after the UE receives the MAC CE, the uplink transmission time indicated by the corresponding UL Grant expires, for example, for the case of indicating absolute time or for the case of indicating time relative to assembling and sending the MAC CE by the eNB, the UE ignores the UL Grant indicated in the MAC CE. If the eNB detects that the UE fails to receive the MAC CE but the indicated UL Grant time expires, the eNB may recycle the resource indicated by the UL Grant and reallocate the resource.

As shown in FIG. 8E, if the eNB detects that the MAC PDU where the MAC CE is located fails to be transmitted finally after HARQ retransmission, that is, the MAC PDU is not successfully received by the UE, the eNB may recycle the resource indicated by the UL Grant and allocate the resource to other UEs. If the eNB fails to allocate the resource to other UEs in time, uplink transmission of the UL Grant indicated by the MAC CE is ignored, and scheduling and retransmission because uplink data is not successfully received using the ULGrant, are not performed to avoid a waste of more resources.

In the embodiment of the present invention, the UE may determine, according to the indication in the MAC PDU, whether scheduling information of the UE exists. Optionally, the obtaining, by the UE, a first MAC CE in the MAC PDU includes:
obtaining, by the UE, the first MAC CE according to a fixed length of bits included in a header of the MAC PDU, where the bits are used to indicate the scheduled user equipments in the group; or
obtaining, by the UE, the first MAC CE according to a MAC CE that is included in the MAC PDU and carries a variable-length bitmap indication, where the bitmap indication is used to indicate the scheduled user equipments in the group; or
obtaining, by the UE, the first MAC CE according to a MAC PDU subheader that carries an identity of the user equipment in the MAC PDU; or
obtaining, by the UE, the first MAC CE according to a MAC CE that carries an identity of the user equipment in the MAC PDU.

In the embodiment of the present invention, the format of the corresponding MAC PDU is not further described herein for brevity. For details, reference may be made to FIG. 5A to FIG. 5G. It should also be understood that the interaction between the UE and the base station, related features, functions, and so on described on the UE side correspond to those on the base station side, and are not further described herein for brevity.

Therefore, by using the method of the embodiment of the present invention, scheduling information of at least one scheduled user equipment is encapsulated in a MAC PDU, and control signaling carried by a control channel is used to schedule the MAC PDU. Thereby, scheduling information can be transmitted in a group-based scheduling mode, which can save overheads of the control channel, improve utilization of resources, and mitigate the problem that the capacity of the control channel is limited.

The method for transmitting scheduling information according to the embodiments of the present invention is described in the foregoing with reference to FIG. 2 to FIG. 8E. A base station and a user equipment according to the embodiments of the present invention are described in the following with reference to FIG. 9 to FIG. 12.

FIG. 9 is a schematic block diagram of a base station 500 according to an embodiment of the present invention. As shown in FIG. 9, the base station 500 includes:
a first determining module 510, configured to determine a group to which at least one user equipment belongs;
a first sending module 520, configured to send a radio resource control message to the at least one user equipment, where the radio resource control message includes group information of the group;
an encapsulating module 530, configured to encapsulate scheduling information of each scheduled user equipment in at least one scheduled user equipment in the group, into a MAC CE in a MAC PDU; and
a second sending module 540, configured to send control signaling to the at least one scheduled user equipment through a control channel, where the control signaling is used to schedule the MAC PDU.

By using the base station of the embodiment of the present invention, scheduling information of at least one scheduled user equipment is encapsulated in a MAC PDU, and control signaling carried by a control channel is used to schedule the MAC PDU. Thereby, scheduling information can be transmitted in a group-based scheduling mode, which can save overheads of the control channel, improve utilization of resources, and mitigate the problem that the capacity of the control channel is limited.

In the embodiment of the present invention, the number of control channel elements carrying the control signaling is determined by the number of the at least one scheduled user equipment. Optionally, the radio resource control message further includes resource information used by the at least one scheduled user equipment for hybrid automatic repeat request HARQ feedback. Optionally, the MAC PDU further includes user equipment information, where the user equipment information is used to indicate a user equipment that needs to make HARQ feedback, in the at least one scheduled user equipment. Optionally, a logical channel identity LCID of a MAC PDU subheader corresponding to a MAC CE carrying scheduling information is used to indicate that the MAC CE carries scheduling information.

In the embodiment of the present invention, optionally, a header of the MAC PDU includes a fixed length of bits, where the bits are used to indicate the scheduled user equipments in the group. Optionally, the MAC PDU includes a MAC CE carrying a variable-length bitmap indication, where the bitmap indication is used to indicate the scheduled user equipments in the group. Optionally, a reserved field or an extension field of a MAC PDU subheader corresponding to a MAC CE carrying scheduling information carries an identity of a user equipment corresponding to the scheduling information. Optionally, the MAC PDU includes MAC CEs carrying identities of the scheduled user equipments in the group.

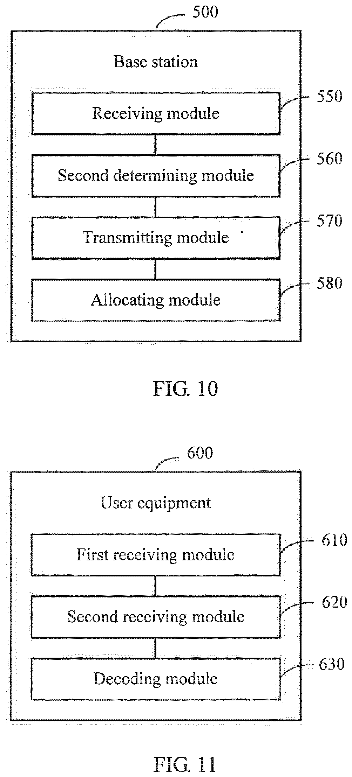

In the embodiment of the present invention, as shown in FIG. 10, optionally, the base station 500 further includes:
a receiving module 550, configured to receive acknowledgement feedback sent by a first user equipment that successfully obtains the scheduling information, in the at least one scheduled user equipment;
a second determining module 560, configured to determine, according to the acknowledgement feedback, a second user equipment that fails to obtain the scheduling information, in the at least one scheduled user equipment; and
a transmitting module 570, configured to transmit the scheduling information of the second user equipment to the second user equipment.

Optionally, as shown in FIG. 10, the base station 500 further includes:
an allocating module 580, configured to reallocate a resource indicated by the scheduling information of the second user equipment when it is determined that the second user equipment fails to obtain the scheduling information.

Optionally, the number of control channel elements carrying the control signaling sent by the second sending module 540 is determined by the number of the at least one scheduled user equipment.

Optionally, the radio resource control message sent by the first sending module 520 further includes resource information used by the at least one scheduled user equipment for hybrid automatic repeat request HARQ feedback.

Optionally, the MAC PDU formed by the encapsulating module 530 further includes user equipment information, where the user equipment information is used to indicate a user equipment that needs to make HARQ feedback, in the at least one scheduled user equipment.

Optionally, in the MAC PDU formed by the encapsulating module 530, a logical channel identity LCID of a MAC PDU subheader corresponding to a MAC CE carrying scheduling information is used to indicate that the MAC CE carries scheduling information.

Optionally, a header of the MAC PDU formed by the encapsulating module 530 includes a fixed length of bits, where the bits are used to indicate the scheduled user equipments in the group.

Optionally, the MAC PDU formed by the encapsulating module 530 includes a MAC CE carrying a variable-length bitmap indication, where the bitmap indication is used to indicate the scheduled user equipments in the group.

Optionally, in the MAC PDU formed by the encapsulating module 530, a reserved field or an extension field of a MAC PDU subheader corresponding to a MAC CE carrying scheduling information carries an identity of a user equipment corresponding to the scheduling information.

Optionally, the MAC PDU formed by the encapsulating module 530 includes MAC CEs carrying identities of the scheduled user equipments in the group.

The base station 500 according to the embodiment of the present invention may correspond to the base station in the method for transmitting scheduling information according to the embodiment of the present invention, and the above and other operations and/or functions of the modules in the base station 500 are respectively used to implement the corresponding procedures of the method 100 in FIG. 2 to FIG. 5G, and are not further described herein for brevity.

By using the base station of the embodiment of the present invention, scheduling information of at least one scheduled user equipment is encapsulated in a MAC PDU, and control signaling carried by a control channel is used to schedule the MAC PDU. Thereby, scheduling information can be transmitted in a group-based scheduling mode, which can save overheads of the control channel, improve utilization of resources, and mitigate the problem that the capacity of the control channel is limited.

FIG. 11 is a schematic block diagram of a user equipment 600 according to an embodiment of the present invention. As shown in FIG. 11, the user equipment 600 includes:
a first receiving module 610, configured to receive a radio resource control message sent by a base station, where the radio resource control message includes group information of a group to which the user equipment belongs;
a second receiving module 620, configured to receive control signaling sent through a control channel by the base station, where the control signaling is used to schedule a media access control MAC protocol data unit PDU carried in a shared channel, where scheduling information of each scheduled user equipment in at least one scheduled user equipment in the group is encapsulated in a MAC control element CE in the MAC PDU; and
a decoding module 630, configured to decode downlink data in the shared channel according to the control signaling.

By using the user equipment of the embodiment of the present invention, scheduling information of at least one scheduled user equipment is encapsulated in a MAC PDU, and control signaling carried by a control channel is used to schedule the MAC PDU. Thereby, scheduling information can be transmitted in a group-based scheduling mode, which can save overheads of the control channel, improve utilization of resources, and mitigate the problem that the capacity of the control channel is limited.

In the embodiment of the present invention, the number of control channel elements carrying the control signaling received by the second receiving module 620 is determined by the number of the at least one scheduled user equipment.

Optionally, the radio resource control message received by the first receiving module 610 further includes resource information used by the at least one scheduled user equipment for hybrid automatic repeat request HARQ feedback.

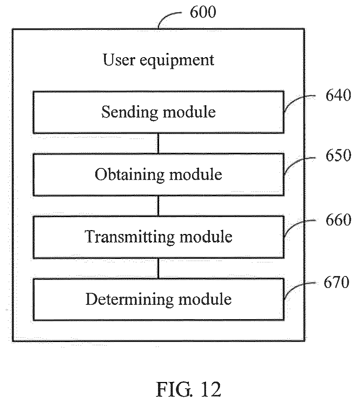

Optionally, as shown in FIG. 12, the user equipment 600 further includes:
a sending module 640, configured to send acknowledgement feedback to the base station only when the user equipment decodes the downlink data in the shared channel successfully and determines that an obtained first MAC CE in the MAC PDU includes first scheduling information of the user equipment.

Optionally, the sending module 640 is specifically configured to send the acknowledgement feedback to the base station according to user equipment information included in the MAC PDU, where the user equipment information is used to indicate a user equipment that needs to make HARQ feedback, in the at least one scheduled user equipment.

Optionally, as shown in FIG. 12, the user equipment 600 further includes:
an obtaining module 650, configured to obtain a first MAC CE in the MAC PDU, where the first MAC CE includes first scheduling information of the user equipment; and
a transmitting module 660, configured to perform uplink transmission according to the first scheduling information.

Optionally, the obtaining module 650 is further configured to:
obtain the first MAC CE according to a fixed length of bits included in a header of the MAC PDU, where the bits are used to indicate the scheduled user equipments in the group; or
obtain the first MAC CE according to a MAC CE that is included in the MAC PDU and carries a variable-length bitmap indication, where the bitmap indication is used to indicate the scheduled user equipments in the group; or
obtain the first MAC CE according to a MAC PDU subheader that carries an identity of the user equipment in the MAC PDU; or
obtain the first MAC CE according to a MAC CE that carries an identity of the user equipment in the MAC PDU.

Optionally, the transmitting module 660 is further configured to:
if no uplink data to be sent exists before scheduling time indicated by the first scheduling information, and the first MAC CE is received before the scheduling time, send a padding buffer status report BSR and/or a padding bit to the base station at the scheduling time; or
if uplink data to be sent exists after the first MAC CE is received and before the scheduling time, send the uplink data and/or a BSR to the base station at the scheduling time.

Optionally, as shown in FIG. 12, the user equipment 600 further includes:
a determining module 670, configured to determine, according to an LCID of a MAC PDU subheader corresponding to the first MAC CE, that the first MAC CE carries the first scheduling information.

The user equipment 600 according to the embodiment of the present invention may correspond to the user equipment in the method for transmitting scheduling information according to the embodiment of the present invention, and the above and other operations and/or functions of the modules in the user equipment 600 are respectively used to implement the corresponding procedures of the method 200 in FIG. 6 to FIG. 8E, and are not further described herein for brevity.

By using the user equipment of the embodiment of the present invention, scheduling information of at least one scheduled user equipment is encapsulated in a MAC PDU, and control signaling carried by a control channel is used to schedule the MAC PDU. Thereby, scheduling information can be transmitted in a group-based scheduling mode, which can save overheads of the control channel, improve utilization of resources, and mitigate the problem that the capacity of the control channel is limited.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on the particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for detailed working processes of the foregoing system, apparatus, and unit, reference may be made to corresponding processes in the foregoing method embodiments, and the details will not be described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and the parts displayed as units may or may not be physical units, that is, may be located in one position, or may be distributed on a plurality of network units. Some or all of the units may be selected to achieve the objectives of the solutions of the embodiments of the present invention according to actual needs.

In addition, functional units in the embodiments of the present invention may be integrated into one processing unit, or each of the units may exist alone physically, or two or more units may be integrated into one unit. The integrated units may be implemented in a form of hardware, or may be implemented in a form of a software functional unit.

When the integrated units are implemented in a form of a software functional unit and sold or used as an independent product, the integrated units may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any equivalent variation or replacement readily figured out by a person skilled in the art within the technical scope disclosed by the present invention shall fall within the protection scope of the present invention. Therefore, the protection scope of the present invention shall be subject to the protection scope of the claims.

## Claims

1. A method for transmitting scheduling information, comprising:
determining (S110), by a base station, a group to which at least one user equipment belongs;
sending (S120), by the base station, a radio resource control message to each of the at least one user equipment, wherein the radio resource control message comprises group information of the group, and the group information of the group comprises a group identity and each position of the at least one user equipment in the group;
encapsulating (S130), by the base station, scheduling information of each scheduled user equipment in the group, into a media access control, MAC, control element, CE, in a MAC protocol data unit, PDU, when the base station is ready to transmit the scheduling information to the at least one user equipment in the group, wherein the header of the MAC PDU or a MAC CE in the MAC PDU comprises a bitmap indication used to indicate the scheduled user equipments in the group and the sequence of the bitmap indication is related to the positions of the at least one user equipment in the group; and
sending (S140), by the base station, control signaling to the scheduled user equipments through a control channel, wherein the control signaling is used to schedule the MAC PDU.

2. The method according to claim 1, wherein the method further comprises:
receiving (S150), by the base station, acknowledgement feedback sent by a first user equipment that successfully obtains the scheduling information of the first user equipment;
determining (S160), by the base station, according to the acknowledgement feedback, a second user equipment that fails to obtain the scheduling information of the second user equipment, wherein the first user equipment and the second user equipment are different scheduled user equipments in the group; and
transmitting (S170), by the base station, the scheduling information of the second user equipment to the second user equipment.

3. The method according to claim 1, wherein the MAC PDU further comprises user equipment information, wherein the user equipment information is used to indicate in the group which scheduled user equipment needs to make hybrid automatic repeat request, HARQ, feedback.

4. A method for receiving scheduling information, comprising:
receiving (S210), by a user equipment, a radio resource control message sent by a base station, wherein the radio resource control message comprises group information of a group to which a user equipment belongs, and the group information of the group comprises a group identity and a position of the user equipment in the group;
receiving (S220), by a user equipment, control signaling sent through a control channel by the base station, wherein the control signaling is used to schedule a media access control, MAC, protocol data unit, PDU, carried in a shared channel, wherein scheduling information of each scheduled user equipment in the group is encapsulated in a MAC control element, CE, in the MAC PDU, and the header of the MAC PDU or a MAC CE in the MAC PDU comprises a bitmap indication used to indicate the scheduled user equipments in the group and the sequence of the bitmap indication is related to the positions of the at least one user equipment in the group;
determining, by a user equipment, the MAC CE in the MAC PDU that comprises scheduling information of the user equipment according to the bitmap indication; and
decoding (S230), by a user equipment, the MAC PDU carried in the shared channel according to the scheduling information of the user equipment in the control signaling.

5. The method according to claim 4, wherein the method further comprises:
sending (S240), by a user equipment, acknowledgement feedback to the base station only when the user equipment decodes the MAC PDU in the shared channel successfully.

6. The method according to claim 4, wherein the method further comprises:
obtaining a first MAC CE in the MAC PDU, wherein the first MAC CE comprises first scheduling information of the user equipment, wherein the first scheduling information of the user equipment is uplink grant; and
performing uplink transmission according to the first scheduling information;
wherein before the obtaining a first MAC CE in the MAC PDU, the method further comprises:
determining, according to a logical channel identity, LCID, of a MAC PDU subheader corresponding to the first MAC CE, that the first MAC CE carries the first scheduling information.

7. The method according to claim 5, wherein the sending acknowledgement feedback to the base station comprises:
sending the acknowledgement feedback to the base station according to user equipment information comprised in the MAC PDU, wherein the user equipment information is used to indicate the user equipment needs to make hybrid automatic repeat request, HARQ, feedback.

8. A base station, comprising:
a first determining module, configured to determine a group to which at least one user equipment belongs;
a first sending module, configured to send a radio resource control message to each of the at least one user equipment, wherein the radio resource control message comprises group information of the group, and the group information of the group comprises a group identity and each position of the at least one user equipment in the group;
an encapsulating module, configured to encapsulate scheduling information of each scheduled user equipment in the group, into a media access control, MAC, control element, CE, in a MAC protocol data unit, PDU, when the base station is ready to transmit the scheduling information to the at least one user equipment in the group, wherein the header of the MAC PDU or a MAC CE in the MAC PDU comprises a bitmap indication used to indicate the scheduled user equipments in the group and the sequence of the bitmap indication is related to the positions of the at least one user equipment in the group; and
a second sending module, configured to send control signaling to the scheduled user equipments through a control channel, wherein the control signaling is used to schedule the MAC PDU.

9. The base station according to claim 8, wherein the base station further comprises:
a receiving module, configured to receive acknowledgement feedback sent by a first user equipment that successfully obtains the scheduling information of the first user equipment;
a second determining module, configured to determine, according to the acknowledgement feedback, a second user equipment that fails to obtain the scheduling information of the second user equipment, wherein the first user equipment and the second user equipment are different scheduled user equipments in the group; and
a transmitting module, configured to transmit the scheduling information of the second user equipment to the second user equipment.

10. The base station according to claim 8, wherein the MAC PDU formed by the encapsulating module further comprises user equipment information, wherein the user equipment information is used to indicate in the group which scheduled user equipment needs to make HARQ feedback.

11. A user equipment, comprising:
a first receiving module, configured to receive a radio resource control message sent by a base station, wherein the radio resource control message comprises group information of a group to which the user equipment belongs, and the group information of the group comprises a group identity and a position of the user equipment in the group;
a second receiving module, configured to receive control signaling sent through a control channel by the base station, wherein the control signaling is used to schedule a media access control, MAC, protocol data unit, PDU, carried in a shared channel, wherein scheduling information of each scheduled user equipment in the group is encapsulated in a MAC control element, CE, in the MAC PDU, and the header of the MAC PDU or a MAC CE in the MAC PDU comprises a bitmap indication used to indicate the scheduled user equipments in the group and the sequence of the bitmap indication is related to the positions of the at least one user equipment in the group;
a determining module, configured to determine the MAC CE in the MAC PDU that comprises scheduling information of the user equipment according to the bitmap indication; and
a decoding module, configured to decode the MAC PDU carried in the shared channel according to the scheduling information of the user equipment in the control signaling.

12. The user equipment according to claim 11, wherein the user equipment further comprises:
a sending module, configured to send acknowledgement feedback to the base station only when the user equipment decodes the MAC PDU in the shared channel successfully.

13. The user equipment according to claim 11, wherein the user equipment further comprises:
an obtaining module, configured to obtain a first MAC CE in the MAC PDU, wherein the first MAC CE comprises first scheduling information of the user equipment, wherein the first scheduling information of the user equipment is uplink grant; and
a transmitting module, configured to perform uplink transmission according to the first scheduling information.

14. The user equipment according to claim 13, wherein the determining module is further configured to determine, according to a logical channel identity, LCID, of a MAC PDU subheader corresponding to the first MAC CE, that the first MAC CE carries the first scheduling information.

15. The user equipment according to claim 12, wherein the sending module is further configured to send the acknowledgement feedback to the base station according to user equipment information comprised in the MAC PDU, wherein the user equipment information is used to indicate the user equipment needs to make hybrid automatic repeat request, HARQ, feedback.

## Patentansprüche

1. Verfahren zum Übertragen von "Scheduling"-Informationen, das umfasst:
Bestimmen (S110), durch eine Basisstation, einer Gruppe, zu welcher wenigstens ein Benutzerendgerät gehört;
Senden (S120), durch die Basisstation, einer Funkressourcenkontrollnachricht an jedes des wenigstens einen Benutzerendgerätes, wobei die Funkressourcenkontrollnachricht Gruppeninformationen der Gruppe umfasst, und die Gruppeninformationen der Gruppe eine Gruppenidentität und die jeweilige Position des wenigstens einen Benutzerendgerätes in der Gruppe umfassen;
Einbetten (S130), durch die Basisstation, von "Scheduling"-Informationen der jeweiligen geplanten Benutzerendgeräte in der Gruppe, in ein "Media Access Control Control Element", MAC CE, in einer MAC "Protocol Data Unit", MAC PDU, wenn die Basisstation bereit zur Übertragung der "Scheduling"-Informationen an das wenigstens eine Benutzerendgerät in der Gruppe ist, wobei der "Header" der MAC PDU oder ein MAC CE in der MAC PDU eine Bitmap-Angabe umfasst, die dazu dient, die geplanten Benutzerendgeräte in der Gruppe anzugeben, und die Reihenfolge der Bitmap-Angaben in Bezug zu den Positionen des wenigstens einen Benutzerendgerätes in der Gruppe steht; und
Senden (S140), durch die Basisstation, einer Kontrollsignalisierung an die geplanten Benutzerendgeräte durch einen Kontrollkanal, wobei die Kontrollsignalisierung dazu dient, die MAC PDU zu planen.

2. Verfahren nach Anspruch 1, wobei das Verfahren ferner umfasst:
Empfangen (S150), durch die Basisstation, einer Bestätigungsrückmeldung, die von einem ersten Benutzerendgerät gesendet wird, welches die "Scheduling"-Informationen des ersten Benutzerendgerätes erfolgreich erhält;
Bestimmen (S160), durch die Basisstation, gemäß der Bestätigungsrückmeldung, eines zweiten Benutzerendgerätes, das die "Scheduling"-Informationen des zweiten Benutzerendgerätes nicht erhält, wobei es sich bei dem ersten Benutzerendgerät und dem zweiten Benutzerendgerät um verschiedene geplante Benutzerendgeräte in der Gruppe handelt; und
Übertragen (S170), durch die Basisstation, der "Scheduling"-Informationen des zweiten Benutzerendgerätes an das zweite Benutzerendgerät.

3. Verfahren nach Anspruch 1, wobei die MAC PDU ferner Benutzerendgerätinformationen umfasst, wobei die Benutzerendgerätinformationen dazu dienen, in der Gruppe anzugeben, welches geplante Benutzerendgerät eine "Hybrid Automatic Repeat Request", HARQ,-Rückmeldung geben muss.

4. Verfahren zum Empfangen von "Scheduling"-Informationen, umfassend:
Empfangen (S210), durch ein Benutzerendgerät, einer von einer Basisstation gesendeten Funkressourcenkontrollnachricht, wobei die Funkressourcenkontrollnachricht Gruppeninformationen einer Gruppe umfasst, zu welcher ein Benutzerendgerät gehört, und die Gruppeninformationen der Gruppe eine Gruppenidentität und eine Position des Benutzerendgerätes in der Gruppe umfassen;
Empfangen (S220), durch ein Benutzerendgerät, einer von der Basisstation durch einen Kontrollkanal gesendeten Kontrollsignalisierung, wobei die Kontrollsignalisierung dazu dient, eine in einem gemeinsam genutzten Kanal mitgeführte "Media Access Control Protocol Data Unit", MAC PDU, zu planen, wobei "Scheduling"-Informationen der jeweiligen geplanten Benutzerendgeräte in der Gruppe in einem MAC "Control Element", MAC CE, in der MAC PDU eingebettet werden, und der "Header" der MAC PDU oder ein MAC CE in der MAC PDU eine Bitmap-Angabe umfasst, die dazu dient, die geplanten Benutzerendgeräte in der Gruppe anzugeben, und die Reihenfolge der Bitmap-Angaben in Bezug zu den Positionen des wenigstens einen Benutzerendgerätes in der Gruppe steht;
Bestimmen, durch ein Benutzerendgerät, des MAC CE in der MAC PDU, das "Scheduling"-Informationen des Benutzerendgerätes gemäß der Bitmap-Angabe umfasst; und
Decodieren (S230), durch ein Benutzerendgerät, der in dem gemeinsam genutzten Kanal mitgeführten MAC PDU gemäß den "Scheduling"-Informationen des Benutzerendgerätes in der Kontrollsignalisierung.

5. Verfahren nach Anspruch 4, wobei das Verfahren ferner umfasst:
Senden (S240), durch ein Benutzerendgerät, einer Bestätigungsrückmeldung an die Basisstation nur dann, wenn das Benutzerendgerät die MAC PDU in dem gemeinsam genutzten Kanal erfolgreich decodiert.

6. Verfahren nach Anspruch 4, wobei das Verfahren ferner umfasst:
Erhalten eines ersten MAC CE in der MAC PDU, wobei das erste MAC CE erste "Scheduling"-Informationen des Benutzerendgerätes umfasst, wobei die ersten "Scheduling"-Informationen des Benutzerendgerätes eine Uplink-Gewährung sind; und
Durchführen einer Uplink-Übertragung gemäß den ersten "Scheduling"-Informationen;
wobei vor dem Erhalten eines ersten MAC CE in der MAC PDU, das Verfahren ferner umfasst:
Bestimmen, gemäß einer "Logical Channel Identity", LCID, eines dem ersten MAC CE entsprechenden MAC PDU-"Subheaders", dass das erste MAC CE die ersten "Scheduling"-Informationen mitführt.

7. Verfahren nach Anspruch 5, wobei das Senden der Bestätigungsrückmeldung an die Basisstation umfasst:
Senden der Bestätigungsrückmeldung an die Basisstation gemäß von in der MAC PDU umfassten Benutzerendgerätinformationen, wobei die Benutzerendgerätinformationen dazu dienen, anzugeben, dass das Benutzerendgerät eine "Hybrid Automatic Repeat Request", HARQ,-Rückmeldung geben muss.

8. Basisstation, umfassend:
ein erstes Bestimmungsmodul, das ausgelegt ist, eine Gruppe zu bestimmen, zu welcher wenigstens ein Benutzerendgerät gehört;
ein erstes Sendemodul, das ausgelegt ist, eine Funkressourcenkontrollnachricht an jedes des wenigstens einen Benutzerendgerätes zu senden, wobei die Funkressourcenkontrollnachricht Gruppeninformationen der Gruppe umfasst, und die Gruppeninformationen der Gruppe eine Gruppenidentität und die jeweilige Position des wenigstens einen Benutzerendgerätes in der Gruppe umfassen;
ein Einbettungsmodul, das ausgelegt ist, "Scheduling"-Informationen jedes geplanten Benutzerendgerätes in der Gruppe in ein "Media Access Control Control Element", MAC CE, in einer MAC "Protocol Data Unit", MAC PDU, einzubetten, wenn die Basisstation bereit zur Übertragung der "Scheduling"-Informationen an das wenigstens eine Benutzerendgerät in der Gruppe ist, wobei der "Header" der MAC PDU oder ein MAC CE in der MAC PDU eine Bitmap-Angabe umfasst, die dazu dient, die geplanten Benutzerendgeräte in der Gruppe anzugeben, und die Reihenfolge der Bitmap-Angaben in Bezug zu den Positionen des wenigstens einen Benutzerendgerätes in der Gruppe steht; und
ein zweites Sendemodul, das ausgelegt ist, eine Kontrollsignalisierung an die geplanten Benutzerendgeräte durch einen Kontrollkanal zu senden, wobei die Kontrollsignalisierung dazu dient, die MAC PDU zu planen.

9. Basisstation nach Anspruch 8, wobei die Basisstation ferner umfasst:
ein Empfangsmodul, das ausgelegt ist, eine Bestätigungsrückmeldung, die von einem ersten Benutzerendgerät gesendet wird, welches die "Scheduling"-Informationen des ersten Benutzerendgerätes erfolgreich erhält, zu empfangen;
ein zweites Bestimmungsmodul, das ausgelegt ist, gemäß der Bestätigungsrückmeldung, ein zweites Benutzerendgerät zu bestimmen, das die "Scheduling"-Informationen des zweiten Benutzerendgerätes nicht erhält, wobei es sich bei dem ersten Benutzerendgerät und dem zweiten Benutzerendgerät um verschiedene geplante Benutzerendgeräte in der Gruppe handelt; und
ein Übertragungsmodul, das ausgelegt ist, die "Scheduling"-Informationen des zweiten Benutzerendgerätes an das zweite Benutzerendgerät zu übertragen.

10. Basisstation nach Anspruch 8, wobei die durch das Einbettungsmodul gebildete MAC PDU ferner Benutzerendgerätinformationen umfasst, wobei die Benutzerendgerätinformationen dazu dienen, in der Gruppe anzugeben, welches geplante Benutzerendgerät eine HARQ-Rückmeldung geben muss.

11. Benutzerendgerät, umfassend:
ein erstes Empfangsmodul, das ausgelegt ist, eine von einer Basisstation gesendete Funkressourcenkontrollnachricht zu empfangen, wobei die Funkressourcenkontrollnachricht Gruppeninformationen einer Gruppe umfasst, zu welcher das Benutzerendgerät gehört, und die Gruppeninformationen der Gruppe eine Gruppenidentität und eine Position des Benutzerendgerätes in der Gruppe umfassen;
ein zweites Empfangsmodul, das ausgelegt ist, von der Basisstation durch einen Kontrollkanal gesendete Kontrollsignalisierung zu empfangen, wobei die Kontrollsignalisierung dazu dient, eine "Media Access Control Protocol Data Unit", MAC PDU, zu planen, die in einem gemeinsam genutzten Kanal mitgeführt wird, wobei "Scheduling"-Informationen der jeweiligen geplanten Benutzerendgeräte in der Gruppe in einem MAC "Control Element", MAC CE, in der MAC PDU eingebettet werden, und der "Header" der MAC PDU oder ein MAC CE in der MAC PDU eine Bitmap-Angabe umfasst, die dazu dient, die geplanten Benutzerendgeräte in der Gruppe anzugeben, und die Reihenfolge der Bitmap-Angaben in Bezug zu den Positionen des wenigstens einen Benutzerendgerätes in der Gruppe steht;
ein Bestimmungsmodul, das ausgelegt ist, das MAC CE in der MAC PDU zu bestimmen, das "Scheduling"-Informationen des Benutzerendgerätes gemäß der Bitmap-Angabe umfasst; und
ein Decodiermodul, das ausgelegt ist, die in dem gemeinsam genutzten Kanal mitgeführte MAC PDU gemäß den "Scheduling"-Informationen des Benutzerendgerätes in der Kontrollsignalisierung zu decodieren.

12. Benutzerendgerät nach Anspruch 11, wobei das Benutzerendgerät ferner umfasst:
ein Sendemodul, das ausgelegt ist, eine Bestätigungsrückmeldung an die Basisstation nur dann zu senden, wenn das Benutzerendgerät die MAC PDU in dem gemeinsam genutzten Kanal erfolgreich decodiert.

13. Benutzerendgerät nach Anspruch 11, wobei das Benutzerendgerät ferner umfasst:
ein Erhaltemodul, das dazu ausgelegt ist, ein erstes MAC CE in der MAC PDU zu erhalten, wobei das erste MAC CE erste "Scheduling"-Informationen des Benutzerendgerätes umfasst, wobei die ersten "Scheduling"-Informationen des Benutzerendgerätes eine Uplink-Gewährung sind; und
ein Übertragungsmodul, das ausgelegt ist, eine Uplink-Übertragung gemäß den ersten "Scheduling"-Informationen durchzuführen.

14. Benutzerendgerät nach Anspruch 13, wobei das Bestimmungsmodul ferner ausgelegt ist, gemäß einer "Logical Channel Identity", LCID, eines dem ersten MAC CE entsprechenden MAC PDU-"Subheaders" zu bestimmen, dass das erste MAC CE die ersten "Scheduling"-Informationen mitführt.

15. Benutzerendgerät nach Anspruch 12, wobei das Sendemodul ferner ausgelegt ist, die Bestätigungsrückmeldung an die Basisstation gemäß von in der MAC PDU umfassten Benutzerendgerätinformationen zu senden, wobei die Benutzerendgerätinformationen dazu dienen, anzugeben, dass das Benutzerendgerät eine "Hybrid Automatic Repeat Request", HARQ,-Rückmeldung geben muss.

## Revendications

1. Procédé de transmission d'informations d'ordonnancement, comprenant les étapes suivantes :
détermination (S110), par une station de base, d'un groupe auquel au moins un équipement d'utilisateur appartient ;
envoi (S120), par la station de base, d'un message de commande des ressources radio à chacun de l'au moins un équipement d'utilisateur, le message de commande des ressources radio comprenant des informations de groupe concernant le groupe et les informations de groupe concernant le groupe comprenant une identité de groupe et chaque position de l'au moins un équipement d'utilisateur dans le groupe ;
encapsulage (S310), par la station de base, d'informations d'ordonnancement concernant chaque équipement d'utilisateur ordonnancé dans le groupe dans un élément de commande, CE, de commande d'accès au support, MAC, dans une unité de données protocolaires, PDU, MAC, lorsque la station de base est prête à transmettre les informations d'ordonnancement à l'au moins un équipement d'utilisateur dans le groupe, l'en-tête de la PDU MAC ou d'un CE MAC dans la PDU MAC comprenant une indication en bitmap servant à indiquer les équipements d'utilisateur ordonnancés dans le groupe et la séquence de l'indication en bitmap étant liée aux positions de l'au moins un équipement d'utilisateur dans le groupe ; et
envoi (S140), par la station de base, d'une signalisation de commande aux équipements d'utilisateur ordonnancés par le biais d'un canal de commande, la signalisation de commande servant à ordonnancer la PDU MAC.

2. Procédé selon la revendication 1, comprenant en outre les étapes suivantes :
réception (S150), par la station de base, d'un retour d'acquittement envoyé par un premier équipement d'utilisateur qui parvient à obtenir les informations d'ordonnancement concernant le premier équipement d'utilisateur ;
détermination (S160), par la station de base, selon le retour d'acquittement, d'un deuxième équipement d'utilisateur qui ne parvient pas à obtenir les informations d'ordonnancement concernant le deuxième équipement d'utilisateur, le premier équipement d'utilisateur et le deuxième équipement d'utilisateur étant des équipements d'utilisateur ordonnancés différents dans le groupe ; et
transmission (S 170), par la station de base, des informations d'ordonnancement concernant le deuxième équipement d'utilisateur au deuxième équipement d'utilisateur.

3. Procédé selon la revendication 1, dans lequel la PDU MAC comprend en outre des informations d'équipement d'utilisateur, les informations d'équipement d'utilisateur servant à indiquer quel équipement d'utilisateur ordonnancé dans le groupe a besoin d'effectuer un retour de demande de répétition automatique hybride, HARQ.

4. Procédé de réception d'informations d'ordonnancement, comprenant les étapes suivantes :
réception (S210), par un équipement d'utilisateur, d'un message de commande des ressources radio envoyé par une station de base, le message de commande des ressources radio comprenant des informations de groupe concernant un groupe auquel un équipement d'utilisateur appartient et les informations de groupe concernant le groupe comprenant une identité de groupe et une position de l'équipement d'utilisateur dans le groupe ;
réception (S220), par un équipement d'utilisateur, d'une signalisation de commande envoyée par le biais d'un canal de commande par la station de base, la signalisation de commande servant à ordonnancer une unité de données protocolaires, PDU, de commande d'accès au support, MAC, véhiculée dans un canal partagé, des informations d'ordonnancement concernant chaque équipement d'utilisateur ordonnancé dans le groupe étant encapsulées dans un élément de commande, CE, MAC dans la PDU MAC, et l'en-tête de la PDU MAC ou d'un CE MAC dans la PDU MAC comprenant une indication en bitmap servant à indiquer les équipements d'utilisateur ordonnancés dans le groupe et la séquence de l'indication en bitmap étant liée aux positions de l'au moins un équipement d'utilisateur dans le groupe ;
détermination, par un équipement d'utilisateur, du CE MAC dans la PDU MAC qui comprend des informations d'ordonnancement concernant l'équipement d'utilisateur selon l'indication en bitmap ; et
décodage (S230), par un équipement d'utilisateur, de la PDU MAC véhiculée dans le canal partagé selon les informations d'ordonnancement concernant l'équipement d'utilisateur dans la signalisation de commande.

5. Procédé selon la revendication 4, comprenant en outre l'étape suivante :
envoi (S240), par un équipement d'utilisateur, d'un retour d'acquittement à la station de base uniquement lorsque l'équipement d'utilisateur parvient à décoder la PDU MAC dans le canal partagé.

6. Procédé selon la revendication 4, comprenant en outre les étapes suivantes :
obtention d'un premier CE MAC dans la PDU MAC, le premier CE MAC comprenant des premières informations d'ordonnancement concernant l'équipement d'utilisateur, les premières informations d'ordonnancement concernant l'équipement d'utilisateur prenant la forme d'une attribution sens montant ; et
réalisation d'une transmission sens montant selon les premières informations d'ordonnancement ;
le procédé comprenant en outre, préalablement à l'étape d'obtention d'un premier CE MAC dans la PDU MAC, l'étape suivante :
détermination, selon une identité de canal logique, LCID, d'un sous-en-tête de PDU MAC correspondant au premier CE MAC, que le premier CE MAC véhicule les premières informations d'ordonnancement.

7. Procédé selon la revendication 5, dans lequel l'étape d'envoi d'un retour d'acquittement à la station de base comprend l'étape suivante :
envoi du retour d'acquittement à la station de base selon des informations d'équipement d'utilisateur contenues dans la PDU MAC, les informations d'équipement d'utilisateur servant à indiquer que l'équipement d'utilisateur a besoin d'effectuer un retour de demande de répétition automatique hybride, HARQ.

8. Station de base, comprenant :
un premier module de détermination, configuré pour déterminer un groupe auquel au moins un équipement d'utilisateur appartient ;
un premier module d'envoi, configuré pour envoyer un message de commande des ressources radio à chacun de l'au moins un équipement d'utilisateur, le message de commande des ressources radio comprenant des informations de groupe concernant le groupe et les informations de groupe concernant le groupe comprenant une identité de groupe et chaque position de l'au moins un équipement d'utilisateur dans le groupe;
un module d'encapsulage, configuré pour encapsuler des informations d'ordonnancement concernant chaque équipement d'utilisateur ordonnancé dans le groupe dans un élément de commande, CE, de commande d'accès au support, MAC, dans une unité de données protocolaires, PDU, MAC, lorsque la station de base est prête à transmettre les informations d'ordonnancement à l'au moins un équipement d'utilisateur dans le groupe, l'en-tête de la PDU MAC ou d'un CE MAC dans la PDU MAC comprenant une indication en bitmap servant à indiquer les équipements d'utilisateur ordonnancés dans le groupe et la séquence de l'indication en bitmap étant liée aux positions de l'au moins un équipement d'utilisateur dans le groupe ; et
un deuxième module d'envoi, configuré pour envoyer une signalisation de commande aux équipements d'utilisateur ordonnancés par le biais d'un canal de commande, la signalisation de commande servant à ordonnancer la PDU MAC.

9. Station de base selon la revendication 8, comprenant en outre :
un module de réception, configuré pour recevoir un retour d'acquittement envoyé par un premier équipement d'utilisateur qui parvient à obtenir les informations d'ordonnancement concernant le premier équipement d'utilisateur ;
un deuxième module de détermination, configuré pour déterminer, selon le retour d'acquittement, un deuxième équipement d'utilisateur qui ne parvient pas à obtenir les informations d'ordonnancement concernant le deuxième équipement d'utilisateur, le premier équipement d'utilisateur et le deuxième équipement d'utilisateur étant des équipements d'utilisateur ordonnancés différents dans le groupe ; et
un module de transmission, configuré pour transmettre les informations d'ordonnancement concernant le deuxième équipement d'utilisateur au deuxième équipement d'utilisateur.

10. Station de base selon la revendication 8, dans lequel la PDU MAC formée par le module d'encapsulage comprend en outre des informations d'équipement d'utilisateur, les informations d'équipement d'utilisateur servant à indiquer quel équipement d'utilisateur ordonnancé dans le groupe a besoin d'effectuer un retour HARQ.

11. Equipement d'utilisateur, comprenant :
un premier module de réception, configuré pour recevoir un message de commande des ressources radio envoyé par une station de base, le message de commande des ressources radio comprenant des informations de groupe concernant un groupe auquel l'équipement d'utilisateur appartient et les informations de groupe concernant le groupe comprenant une identité de groupe et une position de l'équipement d'utilisateur dans le groupe ;
un deuxième module de réception, configuré pour recevoir une signalisation de commande envoyée par le biais d'un canal de commande par la station de base, la signalisation de commande servant à ordonnancer une unité de données protocolaires, PDU, de commande d'accès au support, MAC, véhiculée dans un canal partagé, des informations d'ordonnancement concernant chaque équipement d'utilisateur ordonnancé dans le groupe étant encapsulées dans un élément de commande, CE, MAC dans la PDU MAC, et l'en-tête de la PDU MAC ou d'un CE MAC dans la PDU MAC comprenant une indication en bitmap servant à indiquer les équipements d'utilisateur ordonnancés dans le groupe et la séquence de l'indication en bitmap étant liée aux positions de l'au moins un équipement d'utilisateur dans le groupe ;
un module de détermination, configuré pour déterminer le CE MAC dans la PDU MAC qui comprend des informations d'ordonnancement concernant l'équipement d'utilisateur selon l'indication en bitmap ; et
un module de décodage, configuré pour décoder la PDU MAC véhiculée dans le canal partagé selon les informations d'ordonnancement concernant l'équipement d'utilisateur dans la signalisation de commande.

12. Equipement d'utilisateur selon la revendication 11, comprenant en outre :
un module d'envoi, configuré pour envoyer un retour d'acquittement à la station de base uniquement lorsque l'équipement d'utilisateur parvient à décoder la PDU MAC dans le canal partagé.

13. Equipement d'utilisateur selon la revendication 11, comprenant en outre :
un module d'obtention, configuré pour obtenir un premier CE MAC dans la PDU MAC, le premier CE MAC comprenant des premières informations d'ordonnancement concernant l'équipement d'utilisateur, les premières informations d'ordonnancement concernant l'équipement d'utilisateur prenant la forme d'une attribution sens montant ; et
un module de transmission, configuré pour effectuer une transmission sens montant selon les premières informations d'ordonnancement.

14. Equipement d'utilisateur selon la revendication 13, dans lequel le module de détermination est configuré en outre pour déterminer, selon une identité de canal logique, LCID, d'un sous-en-tête de PDU MAC correspondant au premier CE MAC, que le premier CE MAC véhicule les premières informations d'ordonnancement.

15. Equipement d'utilisateur selon la revendication 12, dans lequel le module d'envoi est configuré en outre pour envoyer le retour d'acquittement à la station de base selon des informations d'équipement d'utilisateur contenues dans la PDU MAC, les informations d'équipement d'utilisateur servant à indiquer que l'équipement d'utilisateur a besoin d'effectuer un retour de demande de répétition automatique hybride, HARQ.
